# EUROPEAN PATENT APPLICATION

(11) **EP 4 205 918 A1**
(43) Date of publication of application: **05.07.2023**
(21) Application number: 21861720.7
(22) Date of filing: 27.08.2021
(51) Int. Cl.: B25J 15/04

(54) **ROBOT SYSTEM AND METHOD OF OPERATING THE ROBOT SYSTEM**

(30) Priority: 31.08.2020 JP 2020146076
(71) Applicant: KAWASAKI JUKOGYO KABUSHIKI KAISHA, Kobe-shi, Hyogo 650-8670 (JP)
(72) Inventor: KAMON, Masayuki, Hyogo 650-8670 (JP); OKA, Tomoki, Hyogo 650-8670 (JP)
(74) Representative: Müller-Boré & Partner Patentanwälte PartG mbB
(86) International application number: PCT/JP2021/031556
(87) International publication number: WO 2022/045299

(57) **Abstract**

A robot system 100 includes an actuator 22 which operates a pair of finger members 30 so that tip-end parts of the pair of finger members 30 approach or separate to/from each other, a control device 50, and a pair of claw members 41. A base-end part of the claw member 41 is provided with an engaging part 81. The tip-end part of the finger member is provided with a to-be-engaged part 61 which is capable of engaging with the engaging part 81. One of the engaging part 81 and the to-be-engaged part 61 has a concave shape extending in a direction from the tip-end part of one of the finger members 30 to the tip-end part of the other finger member 30. The control device 50 operates the finger members 30 so that one of the pair of finger members 30 and the pair of claw members 41 are located between the other pair, and then operates the pair of finger members 30 so that each of the pair of finger members 30 is brought closer to the corresponding claw member 41 to engage the to-be-engaged part with the engaging part.

## Description

### TECHNICAL FIELD

The present disclosure relates to a robot system and a method of operating the robot system.

### BACKGROUND ART

Gripping devices which grip and move a plurality of kinds of objects with different sizes (for example, see Patent Document 1) are known. According to a gripping device disclosed in Patent Document 1, when a gripper is not equipped with an attachment, the gripper can grip a first kind of object, and when the gripper is equipped with the attachment, it can grip a second kind of object via the attachment.

### [Reference Document(s) of Conventional Art]

### [Patent Document]

[Patent Document 1] JP2011-177862A

### DESCRIPTION OF THE DISCLOSURE

### [Problem(s) to be Solved by the Disclosure]

However, in the gripping device disclosed in Patent Document 1, the attachment and the gripper are provided with a to-be-fit part and a fitting part, respectively, so that they extend in the extending direction of the attachment. Thus, when a robotic arm is operated so that the extending direction of the attachment is oriented in the vertical direction, the attachment may fall out from the gripper by its own weight.

The present disclosure is to solve the above-described conventional problem, and one purpose thereof is to provide a robot system and a method of operating the robot system in which a claw member does not fall out from a hand (finger member), even when the orientation of the hand is changed.

### [Summary of the Disclosure]

A robot system according to the present disclosure includes a hand provided with a pair of finger members and an actuator which operates the pair of finger members so that tip-end parts of the pair of finger members approach or separate to/from each other, a control device, and a pair of claw members each configured to be attachable and detachable to/from the corresponding finger member. A base-end part of each of the claw members is provided with an engaging part. The tip-end part of each of the finger members is provided with a to-be-engaged part capable of engaging with the engaging part. One of the engaging part and the to-be-engaged part has a concave shape extending in a direction from the tip-end part of one of the finger members to the tip-end part of the other finger member. The control device operates the finger members so that one of the pair of finger members and the pair of claw members are located between the other pair, and then operates the finger members so that each of the pair of finger members is brought closer to the corresponding claw member to engage the to-be-engaged part with the engaging part.

According to this configuration, the claw member does not fall out from the finger member, even when the orientation of the hand is changed. For example, when the orientation of the hand is changed so that the pair of finger members are lined up in the vertical direction, the claw members are located so that they are lined up in the vertical direction. Thus, even if one claw member located above moves downwardly by its own weight, it will contact the other claw member located below. Therefore, downward movement of one claw member can be suppressed, and it is prevented that the claw member falls out from the finger member.

The above-described purpose, other purposes, features, and advantages of the present disclosure will be made clear by the detailed description of preferred embodiments below, with reference to accompanying drawings.

### [Effect of the Disclosure]

According to the robot system and the robot system of the present disclosure, the claw member does not fall out from the finger member of the hand even when the orientation of the hand is changed.

### BRIEF DESCRIPTION OF DRAWINGS

Fig. 1 is a schematic diagram illustrating an outline configuration of a robot system according to Embodiment 1.
Fig. 2 is a schematic diagram illustrating an outline configuration of the robot system according to Embodiment 1.
Fig. 3 is a schematic diagram illustrating an outline configuration of the robot system according to Embodiment 1.
Fig. 4 is a cross-sectional view illustrating an outline configuration of a support member and a claw member of the robot system illustrated in Fig. 3.
Fig. 5 is a schematic diagram illustrating an outline configuration of a hand and a claw member of the robot system illustrated in Fig. 1.
Fig. 6 is a schematic diagram of the claw member of Fig. 5 seen in a different direction.
Figs. 7A and 7B are schematic diagrams illustrating situations where the hand and the claw member of Fig. 5 hold a workpiece.
Fig. 8 is a schematic diagram illustrating an outline configuration of a tip-end part of a finger member and the claw member of the robot system illustrated in Fig. 3.
Figs. 9A and 9B are schematic diagrams illustrating situations where the claw member illustrated in Fig. 4 is attached to the finger member.
Fig. 10 is a schematic diagram illustrating an outline configuration of a hand equipped with the claw member of Fig. 8.
Fig. 11 is a schematic diagram illustrating an outline configuration of the hand equipped with another claw member.
Fig. 12 is a schematic diagram illustrating an outline configuration of the hand equipped with still another claw member.
Fig. 13 is a schematic diagram illustrating an outline configuration of the hand equipped with still another claw member.
Fig. 14 is a flowchart illustrating one example of operation of the robot system according to Embodiment 1.
Fig. 15 is a schematic diagram illustrating an outline configuration of a hand and a claw member of a robot system of Modification 1 of Embodiment 1.
Fig. 16 is a schematic diagram illustrating an outline configuration of a tip-end part of a finger member and a claw member of a robot system according to Embodiment 2.
Fig. 17 is a cross-sectional view illustrating an outline configuration of a support member and a claw member of a robot system according to Embodiment 3.
Fig. 18 is a schematic diagram illustrating an outline configuration of a tip-end part of a finger member and the claw member of the robot system according to Embodiment 3.
Figs. 19A and 19B are schematic diagrams illustrating situations where the claw member illustrated in Fig. 17 is attached to the finger member.
Fig. 20 is a flowchart illustrating one example of operation of the robot system according to Embodiment 3.
Fig. 21 is a schematic diagram illustrating an outline configuration of a finger member and a claw member of a robot system according to Embodiment 4.

### MODES FOR CARRYING OUT THE DISCLOSURE

Hereinafter, embodiments of the present disclosure will be described with reference to the drawings. Note that, throughout the drawings, the same reference characters are given to the same or corresponding parts to omit redundant explanation. Further, throughout the drawings, components for explaining the present disclosure are selectively illustrated, and illustration of other components may be omitted. Moreover, the present disclosure is not limited to the following embodiments.

### (Embodiment 1)

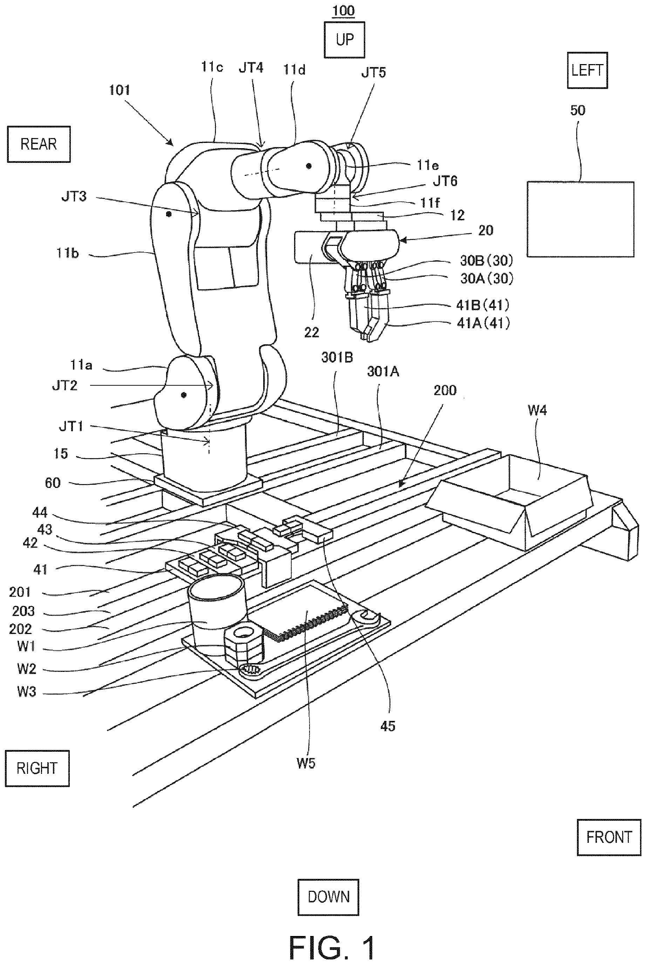

Below, one example of a robot and a robot system according to Embodiment 1 is described with reference to Figs. 1 to 13.

### [Configuration of Robot System]

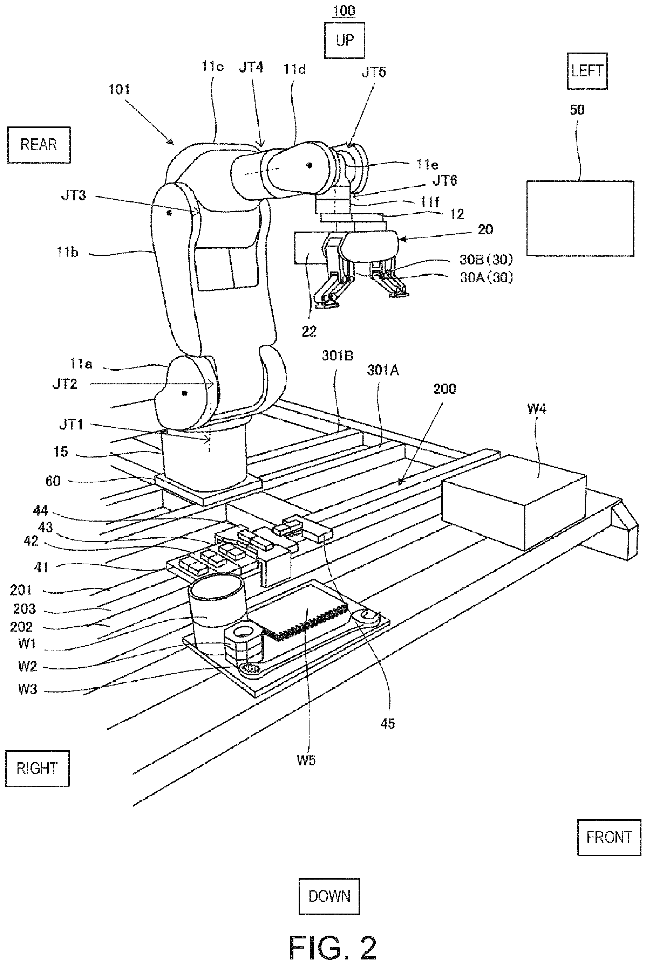

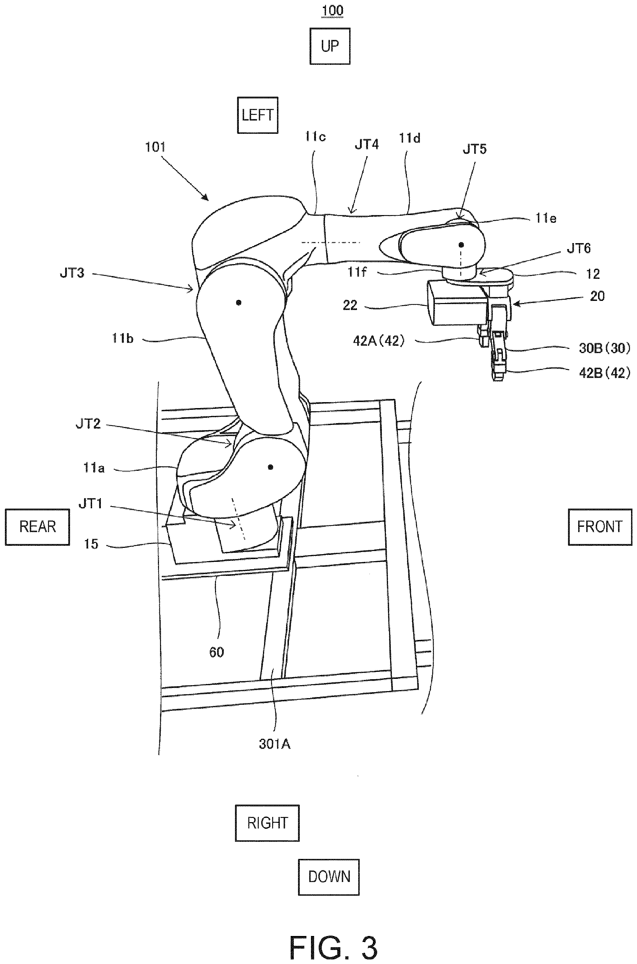

Figs. 1 to 3 are schematic diagrams illustrating an outline configuration of a robot system 100 according to Embodiment 1. Fig. 1 illustrates a state where a claw member is attached to a finger member, and, Fig. 2 illustrates a state where the claw member is removed from the finger member. Further, Fig. 3 illustrates a state seen from a different direction from Fig. 1, and illustrates a state where a different claw member from the claw member illustrated in Fig. 1 is attached.

Note that, in Figs. 1 to 3, a front-and-rear direction, an up-and-down direction, and a left-and-right direction of the robot system are indicated as a front-and-rear direction, an up-and-down direction, and a left-and-right direction in the drawings.

As illustrated in Figs. 1 to 3, the robot system 100 according to Embodiment 1 includes a robot 101, a hand 20, a control device 50, and a support member 200. The robot 101 is placed on a movable body 60. The movable body 60 is disposed on rail members 301A and 301B extending in the left-and-right direction, and it is configured to move in the left-and-right direction by a suitable actuator.

Note that the robot system 100 is further provided with an imaging device (for example, a camera), and image/video information which is imaged by the imaging device may be inputted into the control device 50. Further, the control device 50 may be configured to grasp the shape of a workpiece based on the acquired image/video information, and select a claw member which is adapted for the shape of the workpiece.

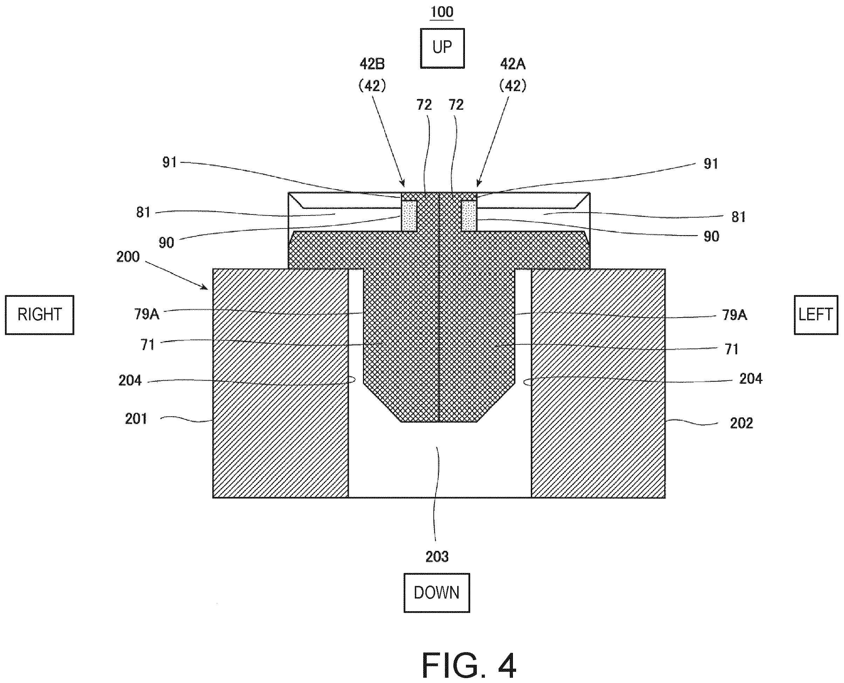

A support member 200 is disposed in front of the robot 101. The support member 200 accommodates a plurality of kinds of pairs of claw members 41-45. Here, a configuration of the support member 200 is described with reference to Figs. 1 and 4. Note that configurations of the claw members 41-45 will be described later.

Fig. 4 is a cross-sectional view illustrating an outline configuration of the support member 200 and the claw member 42 of the robot system 100 illustrated in Fig. 3. Note that, in Fig. 4, the up-and-down direction and the left-and-right direction of the robot system 100 are indicated as the up-and-down direction and the left-and-right direction in the drawing.

As illustrated in Figs. 1 and 4, the support member 200 includes a first support member 201 and a second support member 202 which extend in the left-and-right direction, and a space between the first support member 201 and the second support member 202 constitutes a recess 203. The recess 203 is configured so that each of tip-end parts 71 of the claw members 41-45 is inserted therein. In detail, in a state where the extending direction of the claw members 41-45 is oriented in the vertical direction, each of the tip-end parts 71 of the claw members 41-45 is inserted in the recess 203.

Note that, although in Embodiment 1 the support member 200 is comprised of two members, it is not limited to this configuration but it may be comprised of a single member. In this case, the recess 203 may be formed in an upper surface of one box-shaped member.

Further, as illustrated in Fig. 1, various workpieces W1-W5 are disposed in front of the support member 200. In the robot system 100, the control device 50 or an operator selects various kinds of claw members 41-45 which suit the shapes of the various workpieces W1-W5. The control device 50 operates the robot 101 so that the selected claw member is attached to the finger member 30.

The robot 101 is a vertical articulated robotic arm including a serially-coupled body of a plurality of links (here, a first link 11a to a sixth link 11f), a plurality of joints (here, a first joint JT1 to a sixth joint JT6), and a pedestal 15 which supports these parts. Note that, although in Embodiment 1 the vertical articulated robot is adopted as the robot 101, it is not limited to this configuration but it may adopt a horizontal articulated robot.

In the first joint JT1, the pedestal 15 and a base-end part of the first link 11a are coupled to each other so as to be pivotable on an axis extending vertically. In the second joint JT2, a tip-end part of the first link 11a and a base-end part of the second link 11b are coupled to each other so as to be pivotable on an axis extending horizontally. In the third joint JT3, a tip-end part of the second link 11b and a base-end part of the third link 11c are coupled to each other so as to be pivotable on an axis extending horizontally.

In the fourth joint JT4, a tip-end part of the third link 11c and a base-end part of the fourth link 11d are coupled to each other so as to be pivotable on an axis extending in the longitudinal direction of the fourth link 11d. In the fifth joint JT5, a tip-end part of the fourth link 11d and a base-end part of the fifth link 11e are coupled to each other so as to be pivotable on an axis perpendicular to the longitudinal direction of the fourth link 11d. In the sixth joint JT6, a tip-end part of the fifth link 11e and the base-end part of the sixth link 11f are coupled to each other so as to be twistable.

A mechanical interface 12 is provided to a tip-end part of the sixth link 11f. The hand 20 is detachably attached to the mechanical interface 12. Note that a configuration of the hand 20 will be described later.

Further, the first joint JT1 to the sixth joint JT6 are each provided with a drive motor (not illustrated) as one example of an actuator which relatively rotates two members coupled to each other via the joint. The drive motor may be a servomotor which is servo-controlled by the control device 50, for example. Moreover, the first joint JT1 to the sixth joint JT6 are each provided with a rotation sensor which detects a rotational position of the drive motor, and a current sensor which detects current for controlling rotation of the drive motor (none of them is illustrated). The rotation sensor may be an encoder, for example.

The control device 50 includes an arithmetic processor such as a microprocessor and a CPU, and a memory, such as a ROM and a RAM, (none of them is illustrated). The memory stores information on a basic program, various fixed data, etc. The arithmetic processor is configured to perform various kinds of operation of the robot system 100 by reading and executing software, such as the basic program stored in the memory.

Note that the control device 50 may be comprised of a sole control device which carries out a centralized control, or may be comprised of a plurality of control devices which collaboratively carry out a distributed control. Further, the control device 50 may be comprised of a microcomputer, or may be comprised of an MPU, a PLC (Programmable Logic Controller), a logical circuit, etc.

Next, configurations of the hand 20, the finger member 30, and the various claw members 41-45 are described with reference to Figs. 1 to 13.

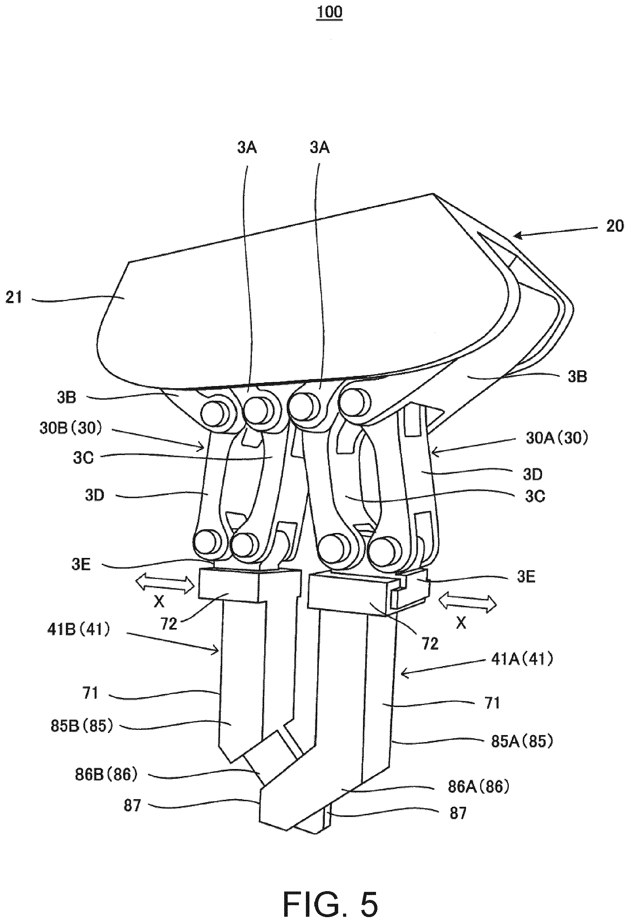

Fig. 5 is a schematic diagram illustrating an outline configuration of the hand 20 and the claw member 41 of the robot system 100 illustrated in Fig. 1.

As illustrated in Figs. 1 and 5, the hand 20 has a pair of finger members 30A and 30B, a main body 21, and an actuator 22. The actuator 22 is disposed behind the main body 21, and it is configured to operate the pair of finger members 30A and 30B so as to approach and separate to/from each other. The actuator 22 may be comprised of a servomotor. The hand 20 may have various kinds of members for making the pair of finger members 30A and 30B approach and separate to/from each other (for example, a gear set and a cam mechanism).

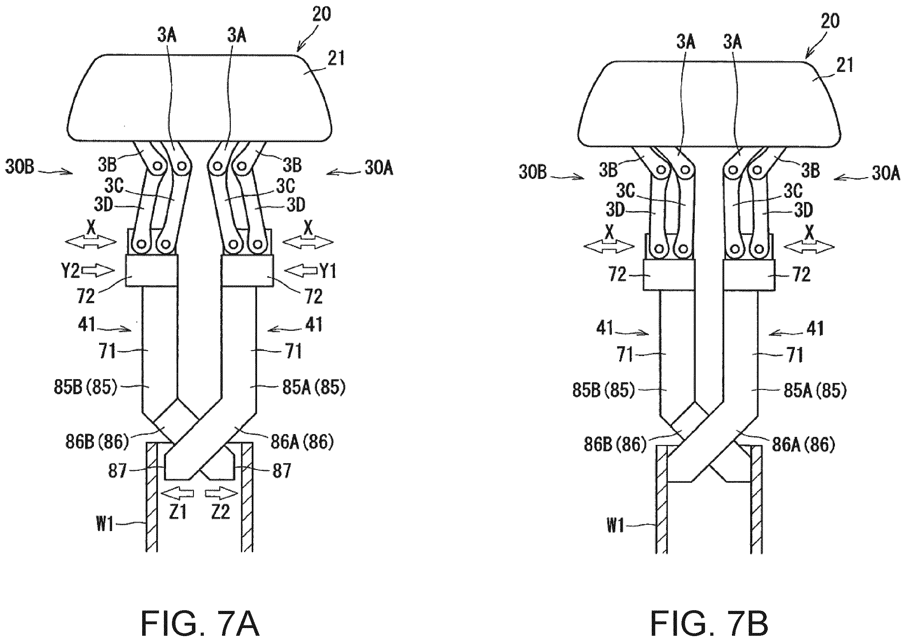

A direction from a tip-end part of one of the finger members (30A) toward a tip-end part of the other finger member (30B) is referred to as a "first direction." In Fig. 5 and Figs. 7A and 7B, a direction illustrated by an arrow X is the first direction. Below, the first direction is described as the left-and-right direction. Here, the extending direction of the finger members 30A and 30B is the vertical direction (up-and-down direction).

The claw members 41A and 41B are connected to the pair of finger members 30A and 30B, respectively. Further, in Embodiment 1, the pair of finger members 30A and 30b each have four link members 3A to 3D and a connecting member 3E.

Note that, when not distinguishing the pair of finger members 30A and 30B from each other, each one may be referred to as "the finger member 30." Similarly, when not distinguishing the claw members 41A and 41B from each other, each one may be referred to as "the claw member 41."

Further, although in Embodiment 1 the finger member 30 has the four link members 3A to 3D, it is not limited to this configuration. The finger member 30 may have a sole link member, or may have two link members.

Base-end parts of the link members 3A and 3B are each rotatably connected to the main body 21. Further, a tip-end part of the link member 3A is rotatably connected to a base-end part of the link member 3C. Similarly, a tip-end part of the link member 3B is rotatably connected to a base-end part of the link member 3D. Tip-end parts of the link members 3C and 3D are each rotatably connected to the connecting member 3E.

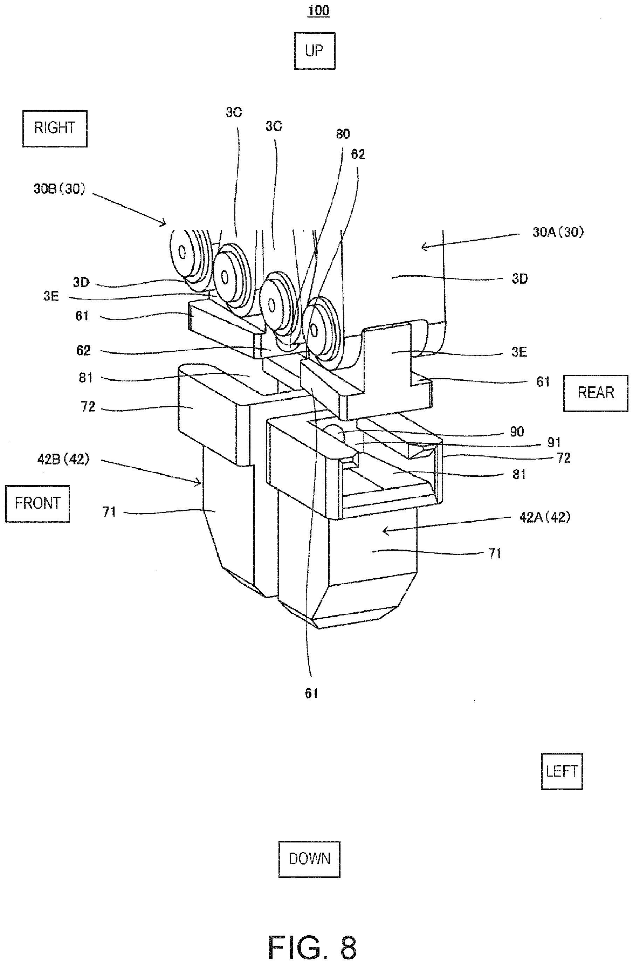

The connecting member 3E provided to the tip-end part of the finger member 30 is connected to a base-end part 72 of the claw member 41. Here, configurations of the connecting member 3E of the finger member 30 and the base-end part 72 of the claw member 42 are described with reference to Fig. 8.

Note that, although in Fig. 8 the claw member 42 is illustrated, since the base-end part 72 of the claw member 41 and the base-end part 72 of the claw member 42 are configured similarly, the base-end part 72 of the claw member 42 will be described below.

Fig. 8 is a schematic diagram illustrating an outline configuration of the tip-end part of the finger member 30 and the claw member 42 of the robot system 100 illustrated in Fig. 3. Note that, in Fig. 8, the front-and-rear direction, the up-and-down direction, and the left-and-right direction of the robot system 100 are indicated as the front-and-rear direction, the up-and-down direction, and the left-and-right direction in the drawing.

As illustrated in Fig. 8, the connecting members 3E of the finger members 30 are each formed in a rectangular parallelepiped shape. In each of a lower-end part on a front surface and a lower-end part on a rear surface of the connecting member 3E, a flange-shaped to-be-engaged part 61 extending in the left-and-right direction is formed.

The to-be-engaged part 61 is formed in a tapered shape. In detail, the to-be-engaged part 61 on the finger member 30A side is formed in a tapered shape so that the right surface becomes smaller in the area than the left surface. Further, the to-be-engaged part 61 on the finger member 30B side is formed in a tapered shape so that the left surface becomes smaller in the area than the right surface.

Moreover, a first lock mechanism 80 is provided to a right surface of the connecting member 3E on the finger member 30A side (an inner surface; a tip-end part 62 of the to-be-engaged part 61). Similarly, the first lock mechanism 80 is provided to a left surface of the connecting member 3E on the finger member 30B side (an inner surface; a tip-end part 62 of the to-be-engaged part 61). Further, a first lock mechanism 90 is provided to a first stopper part 91 (described later) of the claw member 42.

The first lock mechanisms 80 and 90 may be any kinds of mechanisms, as long as they can stop the claw member 42 so that the claw member 42 does not fall by its own weight, when the tip-end part of the to-be-engaged part 61 is oriented downwardly. The first lock mechanisms 80 and 90 may be comprised of magnets, or may be comprised of ball plungers, for example.

The claw member 42 is formed in an inverted L-shape when seen in the front-and-rear direction, and it has the base-end part 72 which extends in the left-and-right direction and a tip-end part 71 which extends in the up-and-down direction. A concave engaging part 81 is formed in the base-end part 72 of the claw member 42A, which opens on the left-surface side and extends in the left-and-right direction (first direction). Similarly, the concave engaging part 81 is formed in the base-end part 72 of the claw member 42B, which opens on the right surface side and extends in the left-and-right direction.

The engaging part 81 engages with the to-be-engaged part 61 so that the claw member 42 is attached to the finger member 30. Note that the inner circumferential surface of the engaging part 81 may be formed in a tapered shape so that it fits with the to-be-engaged part 61.

Further, a bottom surface of the recess which constitutes the engaging part 81 constitutes the first stopper part 91. The first stopper part 91 limits movement of the finger member 30 when the tip-end part 62 of the to-be-engaged part 61 contacts the first stopper part 91. Therefore, it makes the positioning of the finger member 30 and the claw member 42 easier.

Moreover, the first lock mechanism 90 is provided to the first stopper part 91. The first lock mechanism 90 can collaborate with the first lock mechanism 80 to fix the claw member 42 to the finger member 30.

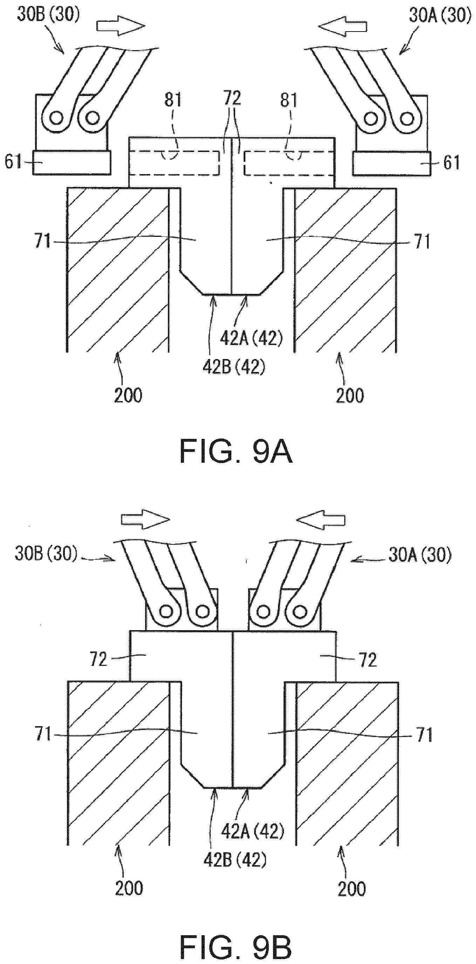

Figs. 9A and 9B illustrate a situation where the claw member 42 accommodated in the support member 200 is attached to the finger member 30. First, the control device 50 operates the robot 101 to move the finger members 30A and 30B so that the claw members 42 are located between the pair of finger members 30A and 30B (Fig. 9A). Next, the control device 50 operates the actuator 22 to bring each of the pair of finger members 30A and 30B closer to the corresponding claw member 41. In this form, the pair of finger members 30A and 30B are brought closer to each other. Thus, each engaging part 81 engages with the corresponding to-be-engaged part 61 (Fig. 9B). Therefore, the claw member 42 is attached to the finger member 30.

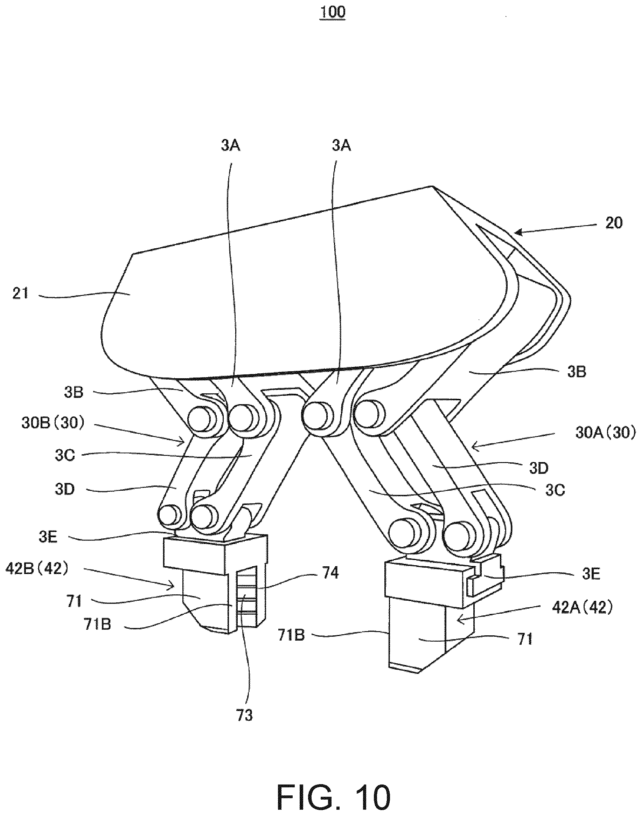

Next, a configuration of each of the various claw members 41-45 is described with reference to Figs. 5 to 7 and 10 to 13. In Figs. 5 to 7, the hand 20 to which the claw member 41 is attached is illustrated. Figs. 10 to 13 are schematic diagrams illustrating an outline configuration of the hand 20 to which another claw member is attached. Note that, as for the claw members 42-45, when distinguishing each of the pair of claw members, they are referred to as the claw members 42A-45A and 42B-45B. Further, below, since the base-end part 72 of the claw member 41 and the claw members 43-45 is configured similarly to the base-end part 72 of the claw member 42 described above, the detailed explanation is omitted.

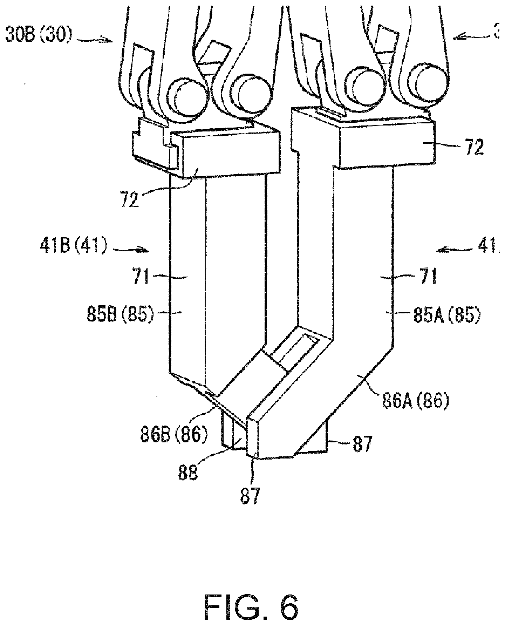

In Fig. 5, the hand 20 to which the claw member 41 is attached is illustrated. Fig. 6 is a view of the claw member 41 seen from a different direction from Fig. 5. As illustrated in Figs. 5 and 6, each of the tip-end parts 71 of the claw members 41 is provided with a first part 85 connected from the base-end part 72, and a second part 86 which extends obliquely to the first part 85. The first part 85A of one claw member 41A and the first part 85B of the other claw member 41B extend in parallel to each other. The second part 86A of one claw member 41A and the second part 86B of the other claw member 41B intersect with each other. As illustrated in Fig. 6, the second part 86A of one claw member 41A has a slit 88 at the center in the thickness direction (the width direction of the mutually-opposing surfaces of the pair of tip-end parts 71), which extends from the tip end toward the root side. The second part 86B of the other claw member 41B penetrates the slit 88 so that the second part 86A of one claw member 41A and the second part 86B of the other claw member 41B intersect with each other. Each tip-end part 71 is provided with a contact surface 87 perpendicular to the first direction X.

In Figs. 7A and 7B, a situation where the robot system 100 holds a cylindrical workpiece W1 is illustrated. When holding the cylindrical workpiece W1, first, the control device 50 operates the robot 101 to insert the tip-end part 71 of each claw member 41 into the cylindrical workpiece W1. Fig. 7A illustrates a state where the tip-end part 71 is inserted into the workpiece W1.

Next, the control device 50 operates the actuator 22 to move the finger members 30 so that the tip-end parts of the pair of finger members 30 approach each other in the first direction X. In Fig. 7A, an arrow Y1 and an arrow Y2 indicate the moving directions of the tip-end parts of the finger members 30. The directions Y1 and Y2 are also the moving directions of the base-end parts 72 of the claw members 41. In this embodiment, the moving directions Y1 and Y2 of the tip-end parts of the finger members 30 are parallel to the first direction X. The moving direction of the tip-end part of the finger member 30 does not include any components other than the component in the first direction X. By adjusting inclination angles of the link members 3A, 3B, 3C, and 3D, the tip-end part of each finger member 30 moves in parallel with the first direction X, without moving up and down.

In Fig. 7A, an arrow Z1 and an arrow Z2 indicate the moving directions of the tip ends of the tip-end parts 71 of the claw members 41. Since the second part 86A of one claw member 41A and the second part 86B of the other claw member 41B intersect with each other as described above, the tip ends of the tip-end parts 71 of the claw members 41 move in a direction separating from each other, when the base-end parts 72 of the claw members 41 move in a direction approaching each other. The tip end of the tip-end part 71 of the claw member 41 moves in parallel with the first direction X. Therefore, the contact surface 87 of each tip-end part 71 contacts the inner circumferential surface of the workpiece W1. In Fig. 7B, a state where the contact surface 87 is in contact with the inner circumferential surface of the workpiece W1 is illustrated. Thus, the robot system 100 holds the cylindrical workpiece W1 from the inner circumferential surface side. Similarly, the robot system 100 can hold an annular workpiece W2 from the inner circumferential surface side.

When the robot system 100 releases the cylindrical workpiece W1, the control device 50 operates the actuator 22 to operate the finger members 30 so that the tip-end parts of the pair of finger members 30 separate from each other in the first direction X. The tip ends of the tip-end parts 71 of the claw members 41 move in the direction approaching each other. The contact surface 87 of each tip-end part 71 separates from the inner circumferential surface of the workpiece W1. Therefore, the cylindrical workpiece W1 is released from the robot system 100.

As illustrated in Fig. 10, the claw member 42 has a recess 73 which is formed in an inner surface 71B of the tip-end part 71 so as to extend in the up-and-down direction. A plurality of grooves 74 are formed in the recess 73. Thus, the annular workpiece W2 where the peripheral surface is formed in a polygonal shape can be held easily by the recess 73 without slip (see Figs. 1 and 2).

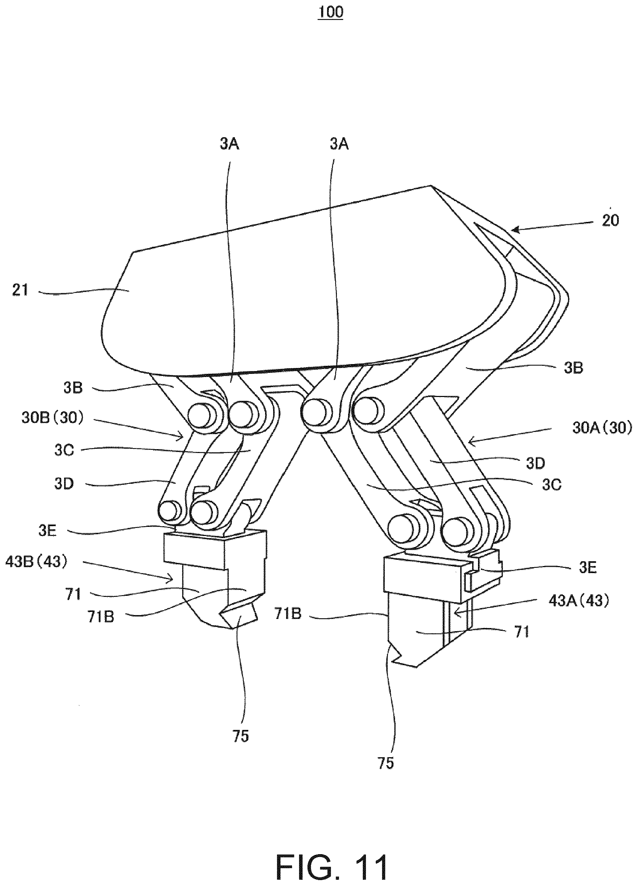

As illustrated in Fig. 11, in the claw member 43, a V-shaped (or a U-shaped) notch 75 is formed in the inner surface 71B of the tip-end part 71. Thus, by bringing the notch 75 in contact with a bar-shaped workpiece W3, such as a wrench, the workpiece W3 can be held easily (see Figs. 1 and 2).

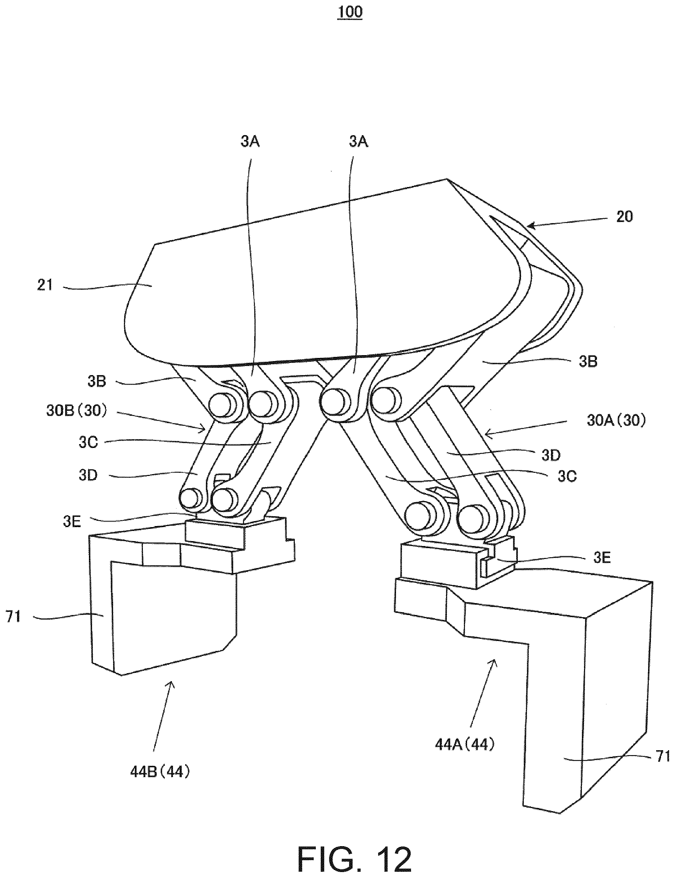

As illustrated in Fig. 12, the tip-end part 71 of the claw member 44 is formed in an inverted L-shape. Therefore, it can easily hold a box-shaped workpiece W4, such as a cardboard box (see Figs. 1 and 2).

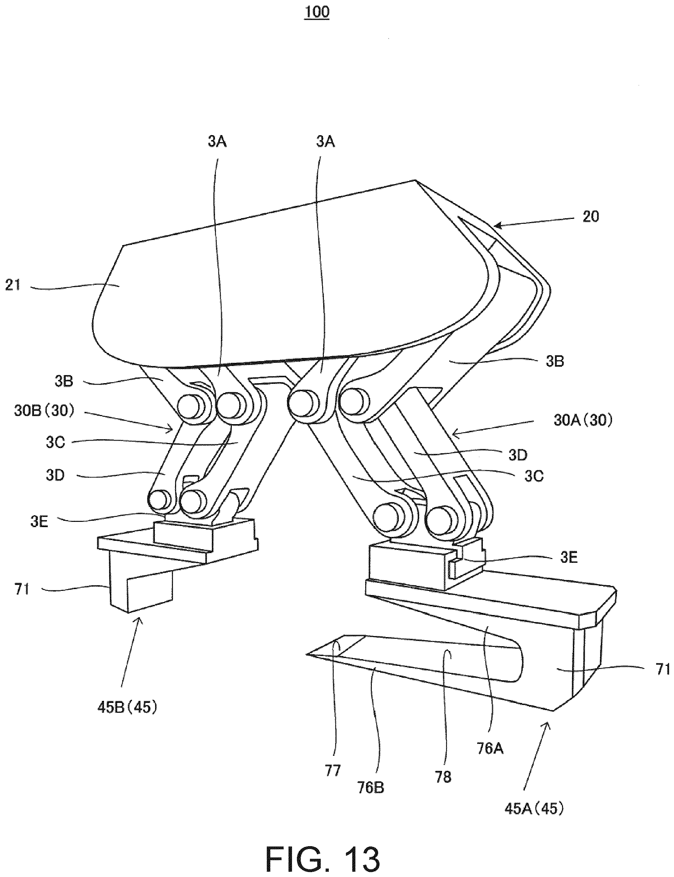

As illustrated in Fig. 13, the tip-end part 71 of the claw member 45A is formed in a U-shape. In detail, the tip-end part 71 of the claw member 45A has a pair of foot parts 76A and 76B. The foot part 76B located below is configured so that its upper surface inclines in a plurality of steps (here, two steps), and the inclination angle of a tip-end part 77 becomes larger than the inclination angle of a base-end part 78. The tip-end part 71 of the claw member 45B is formed in an inverted L-shape. Therefore, it can easily hold a plate-like workpiece W5, such as a notebook (see Figs. 1 and 2). In particular, since the inclination angle of the tip-end part 77 of the foot part 76B of the claw member 45A is larger than the inclination angle of the base-end part 78, the tip-end part 77 can easily enter between a lower surface of the workpiece W5 and a floor surface. Further, when placing the held workpiece W5 on the floor surface etc., since the inclination angle of the tip-end part 77 is large, it can drop the workpiece W5 directly below, and can place the workpiece W5 correctly.

### [Operation and Effects of Robot System]

Next, operation and effects of the robot system 100 according to Embodiment 1 are described in detail with reference to Figs. 1 to 14. Note that the following operation is performed by the arithmetic processor of the control device 50 reading the program stored in the memory.

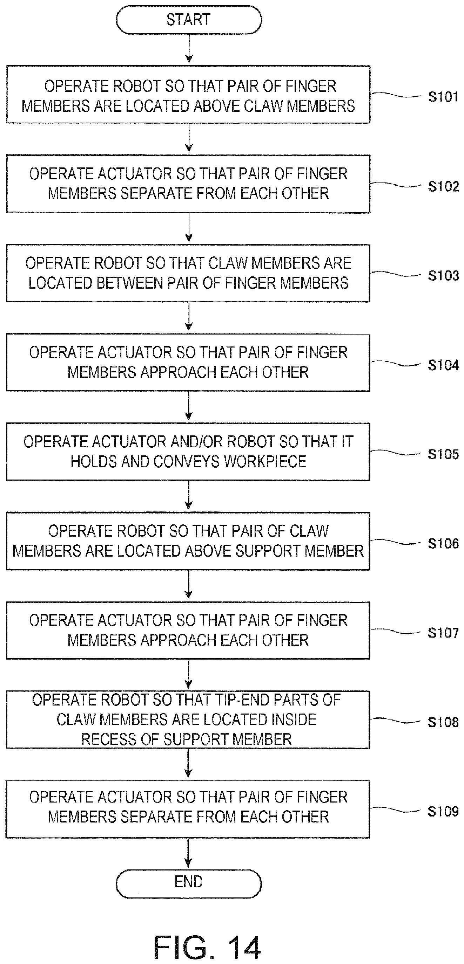

Fig. 14 is a flowchart illustrating one example of operation of the robot system 100 according to Embodiment 1. The control device 50 operates the robot 101 to move the finger members 30 to given positions. That is, the control device 50 operates the finger members 30 via the robot 101. The control device 50 operates the actuator 22 to bring the pair of finger members 30 closer or farther to/from each other. That is, the control device 50 operates the pair of finger members 30 so that they approach or separate to/from each other via the actuator 22. Each processing described in Fig. 14 is realized by the control device 50 operating the finger members 30.

First, as illustrated in Fig. 2, suppose that the various claw members 41-45 are not attached to the pair of finger members 30A and 30B. In addition, the robot system 100 is configured to perform a conveying work in which it conveys the workpiece W4, and then conveys the workpieces W1 to W3 and W5, which are disposed inside the workpiece W4, to the outside of the workpiece W4. Further, the robot system 100 is configured to perform a conveying work in which it conveys the workpieces W1 to W3 and W5, which are disposed outside the workpiece W4, into the workpiece W4, and conveys the workpiece W4.

Then, suppose that a worker (operator) operates an operation terminal (not illustrated) to input into the control device 50 an instruction signal for performing the conveying work to convey the workpieces W1-W5.

Note that the operator may give an instruction about which workpiece is to be held and conveyed, to the control device 50 by using the operation terminal. Further, based on the image/video information acquired from the imaging device (not illustrated), the control device 50 may grasp the shape of the workpiece and select the claw member which is adapted for (optimal to) the shape of the workpiece.

Then, as illustrated in Fig. 14, the control device 50 operates the robot 101 so that the pair of finger members 30A and 30B are located above the claw members 41 (Step S101). Next, the control device 50 operates the actuator 22 so that the pair of finger members 30A and 30B separate from each other (Step S102).

Next, the control device 50 operates the robot 101 so that the claw members 41 are located between the pair of finger members 30A and 30B (Step S 103). In more detail, the control device 50 operates the robot 101 so that the tip-end part 62 of the to-be-engaged part 61 of the finger member 30 opposes to an opening of the engaging part 81 of the claw member 41. A state of the finger member 30 and the claw member 41 at this time corresponds to the state of Fig. 9A described above which is described using the claw member 42.

Next, the control device 50 operates the actuator 22 so that the pair of finger members 30A and 30B approach each other (Step S104). The tip ends of the pair of finger members 30A and 30B approach the corresponding claw members 41. Thus, the to-be-engaged part 61 of the finger member 30 engages with the engaging part 81 of the claw member 41 so that the claw member 41 is attached to the finger member 30. A state of the finger member 30 and the claw member 41 at this time corresponds to the state of Fig. 9B described above which is described using the claw member 42.

Here, the movement of the finger member 30 is limited by the tip-end part 62 of the to-be-engaged part 61 contacting the first stopper part 91. Therefore, it makes the positioning of the finger member 30 and the claw member 42 easier. Further, as the first lock mechanism 90 contacts the first lock mechanism 80, the claw member 42 is fixed to the finger member 30.

Next, the control device 50 operates the actuator 22 and/or the robot 101 so that it holds and conveys the workpiece W1 (Step S105). Next, the control device 50 makes the robot 101 perform an operation for releasing the claw members 41 so that it can hold and convey a workpiece different from the workpiece W1 (for example, the workpiece W2). In detail, the control device 50 operates the robot 101 so that the pair of claw members 41A and 41B are located above the support member 200 (Step S106).

Next, the control device 50 operates the actuator 22 so that the pair of finger members 30A and 30B approach each other (Step S 107). Therefore, the pair of claw members 41A and 41B can approach each other, and can be located above the opening of the recess 203 of the support member 200.

Next, the control device 50 operates the robot 101 so that the tip-end parts 71 of the claw members 41 are located inside the recess 203 of the support member 200 (Step S108). In detail, the control device 50 operates the robot 101 so that the claw members 41 is moved downwardly and is inserted into the recess 203.

Next, the control device 50 operates the actuator 22 so that the pair of finger members 30A and 30B separate from each other (Step S109), and then ends this program.

Thus, although the pair of claw members 41A and 41B move so as to separate from each other according to the pair of finger members 30A and 30B, the pair of claw members 41A and 41B become impossible to move in the separating direction by side surfaces 79A outside of the tip-end parts 71 of the claw members 41A and 41B contacting an inner surface 204 of the first support member 201 or an inner surface 204 of the second support member 202, respectively. Thus, the pair of finger members 30A and 30B can release the claw members 41, and the claw members 41 are accommodated in the support member 200.

Note that, when holding and conveying the workpiece different from the workpiece W1 (for example, the workpiece W2), the control device 50 again performs the processing of Steps S101 to S109.

In the robot system 100 according to Embodiment 1 configured in this way, the concave engaging part 81 extending in the left-and-right direction (first direction) is formed in the base-end part 72 of the claw members 41-46. Further, the flange-shaped to-be-engaged part 61 extending in the left-and-right direction (first direction) is formed in the tip-end part of the finger member 30.

Thus, the claw members 41 can be easily attached to the finger members 30 by the control device 50 moving the robot 101 so that the claw members 41 are located between the pair of finger members 30A and 30B, and then operating the actuator 22 so that the pair of finger members 30A and 30B approach each other.

Further, in the robot system 100 according to Embodiment 1, the bottom surface of the recess which constitutes the engaging part 81 constitutes the first stopper part 91. Therefore, when attaching one of the claw members 41-46 to the finger member 30, the movement of the finger member 30 is limited by the tip-end part 62 of the to-be-engaged part 61 contacting the first stopper part 91. Therefore, it makes the positioning of the finger member 30 and the claw member easier.

Further, in the robot system 100 according to Embodiment 1, the first stopper part 91 of the claw member is provided with the first lock mechanism 90, and the tip-end part 62 of the to-be-engaged part 61 of the finger member 30 is provided with the first lock mechanism 80.

Therefore, the first lock mechanism 90 and the first lock mechanism 80 can jointly fix the claw member 42 to the finger member 30.

Further, even if the robot system 100 operates to change the orientation of the hand 20 so that the pair of finger members 30A and 30B are lined up in the vertical direction, the first lock mechanism 80 and the first lock mechanism 90 prevent that the claw members 41 fall out from the finger members 30.

Moreover, even if the fixation by the first lock mechanism 80 and the first lock mechanism 90 is cancelled, it is prevented that the claw members 41 fall out from the finger members 30 for the following reasons.

When the orientation of the hand 20 is changed so that the pair of finger members 30A and 30B are lined up in the vertical direction, the pair of claw members 41A and 41B are located so that they are lined up vertically. Thus, even if one claw member 41A located above moves downwardly by its own weight, it will contact the other claw member 41B located below. Therefore, the downward movement of one claw member 41A can be suppressed, and it is prevented that the claw member 41A falls out from the finger member 30A.

Further, in the robot system 100 according to Embodiment 1, the pair of claw members 41A and 41B are configured so that their tip-end parts 71 separate from each other, when they move in parallel with the first direction so that the pair of finger members 30A and 30B approach each other. In detail, the tip-end part 71 of the claw member 41A and the tip-end part 71 of the claw member 41B are configured to intersect with each other on the way.

Therefore, it can hold the circular cylindrical or annular (cylindrical or annular) workpiece W1 from the inner circumferential surface side.

The robot system 100 according to Embodiment 1 includes the hand 20 provided with the pair of finger members 30 and the actuator 22 which operates the pair of finger members 30 so that their tip-end parts approach or separate to/from each other, the control device 50, and the pair of claw members 41 each configured to be attachable and detachable to/from the corresponding finger member 30. The base-end part 72 of each claw member 41 is provided with the engaging part 81, and the tip-end part of each finger member 30 is provided with the to-be-engaged part 61 which may engage with the engaging part 81. The engaging part 81 has a concave shape extending in a direction from the tip-end part of one finger member 30 to the tip-end part of the other finger member 30. The control device 50 operates the finger members 30 so that the pair of claw members 41 are located between the pair of finger members 30, and then operates them so that each of the pair of finger members 30 is brought closer to the corresponding claw member 41 to engage the to-be-engaged part 61 with the engaging part 81. In this form, the control device 50 operates the finger members 30 so that the pair of finger members 30 approach each other to engage the to-be-engaged part 61 with the engaging part 81.

The robot system 100 according to Embodiment 1 may further include the support member 200 which accommodates the claw members 41 in the state where the extending direction of the claw members 41 is oriented in the vertical direction, when the claw members 41 are not attached to the finger member 30. The support member 200 may be provided with the recess 203, and the tip-end part 71 of the claw member 41 may be inserted in the recess 203 of the support member 200.

In the robot system 100 according to Embodiment 1, the to-be-engaged part 61 may be formed in a tapered shape.

In the robot system 100 according to Embodiment 1, the first stopper part 91 may be provided to the claw member 41 so that it opposes to the tip end of the to-be-engaged part 61 of the finger member 30.

In the robot system 100 according to Embodiment 1, the first lock mechanism may be provided to each of the first stopper part 91 of the claw member 41 and the tip-end part of the to-be-engaged part 61 of the finger member 30.

In the robot system 100 according to Embodiment 1, the plurality of kinds of pairs of claw members may be accommodated in the support member 200 so that they are lined up in a third direction.

In the robot system 100 according to Embodiment 1, the actuator 22 may be configured to operate at least one of the pair of finger members 30.

The method of operating the robot system 100 according to Embodiment 1 includes the hand 20 provided with the pair of finger members 30 and the actuator 22 which operates the finger members 30 so that the tip-end parts of the pair of finger members 30 approach or separate to/from each other, the control device 50, and the pair of claw members 41 each configured to be attachable and detachable to/from the corresponding finger member 30. The base-end part 72 of each claw member 41 is provided with the engaging part 81, and the tip-end part of each finger member 30 is provided with the to-be-engaged part 61 which may engage with the engaging part 81. The engaging part 81 has a concave shape extending in the direction from the tip-end part of one finger member 30 to the tip-end part of the other finger member 30. The method operates the finger members 30 so that the pair of claw members 41 are located between the pair of finger members 30, and then operates them so that the pair of finger members 30 approach each other to engage the to-be-engaged part 61 with the engaging part 81.

Alternatively, the method of operating the robot system 100 according to Embodiment 1 may further include the support member 200 which accommodates the claw members 41 in the state where the extending direction of the claw members 41 is oriented in the vertical direction, when the claw members 41 are not attached to the finger member 30. The support member 200 may be provided with the recess 203, and the tip-end part 71 of the claw member 41 may be inserted in the recess 203 of the support member 200.

Alternatively, in the method of operating the robot system 100 according to Embodiment 1, the to-be-engaged part 61 may be formed in a tapered shape.

Alternatively, in the method of operating the robot system 100 according to Embodiment 1, the claw members 41A and 41B may be provided with the first stopper part 91 so that it opposes to the tip ends of the to-be-engaged parts 61 of the finger members 30A and 30B.

In the method of operating the robot system 100 according to Embodiment 1, the first stopper part 91 of the claw member 41A or 41B, and the tip-end part of the to-be-engaged part 61 of the finger member 30A or 30B may be provided with the first lock mechanism.

### [Modification 1]

Next, a robot system of Modification 1 of Embodiment 1 is described.

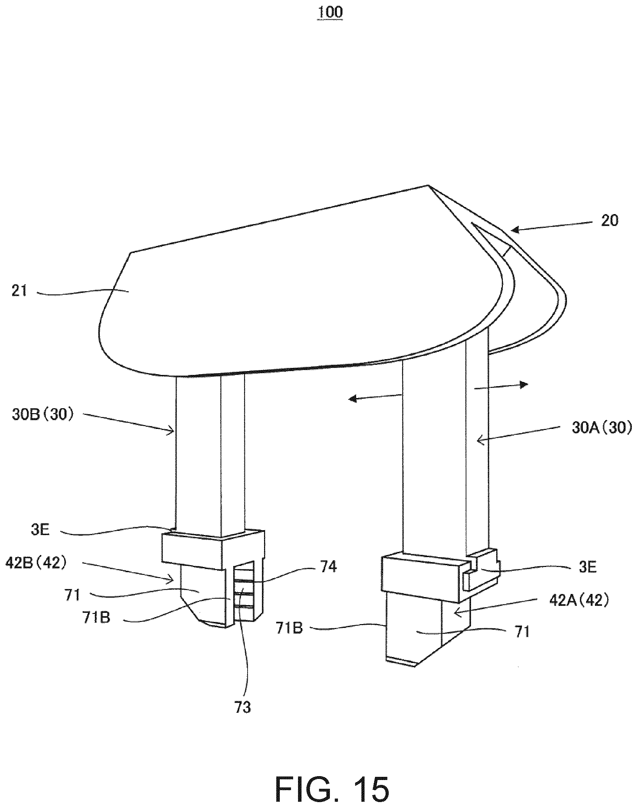

Below, one example of the robot system of Modification 1 of Embodiment 1 is described with reference to Fig. 15.

Fig. 15 is a schematic diagram illustrating an outline configuration of the hand 20 and the claw member 42 of the robot system 100 of Modification 1 of Embodiment 1.

As illustrated in Fig. 15, the robot system 100 of Modification 1 of Embodiment 1 is the same in the fundamental configuration as the robot system 100 according to Embodiment 1, but it differs in that at least one of the pair of finger members 30 operates.

In detail, the actuator 22 is configured to operate at least one finger member 30 among the pair of finger members 30A and 30B. For example, the actuator 22 may be configured to operate only the finger member 30A. In this case, the finger member 30B may be fixed to the main body 21 of the hand 20. Further, the actuator 22 may be configured to operate only the finger member 30B. In this case, the finger member 30A may be fixed to the main body 21 of the hand 20. Moreover, the actuator 22 may be configured to operate both of the pair of finger members 30A and 30B.

The robot system 100 of Modification 1 configured in this way also provides similar operation and effects to the robot system 100 according to Embodiment 1.

In the robot system 100 of Modification 1 of Embodiment 1, the actuator 22 is configured to operate at least one of the pair of finger members 30.

Further, in the robot system 100 of Modification 1 of Embodiment 1, the other of the pair of finger members 30 may be fixed to the main body 21 of the hand 20.

In the method of operating the robot system of Modification 1 of Embodiment 1, the actuator 22 is configured to operate at least one of the pair of finger members 30.

Further, in the method of operating the robot system 100 of Modification 1 of Embodiment 1, the other of the pair of finger members 30 may be fixed to the main body 21 of the hand 20.

### (Embodiment 2)

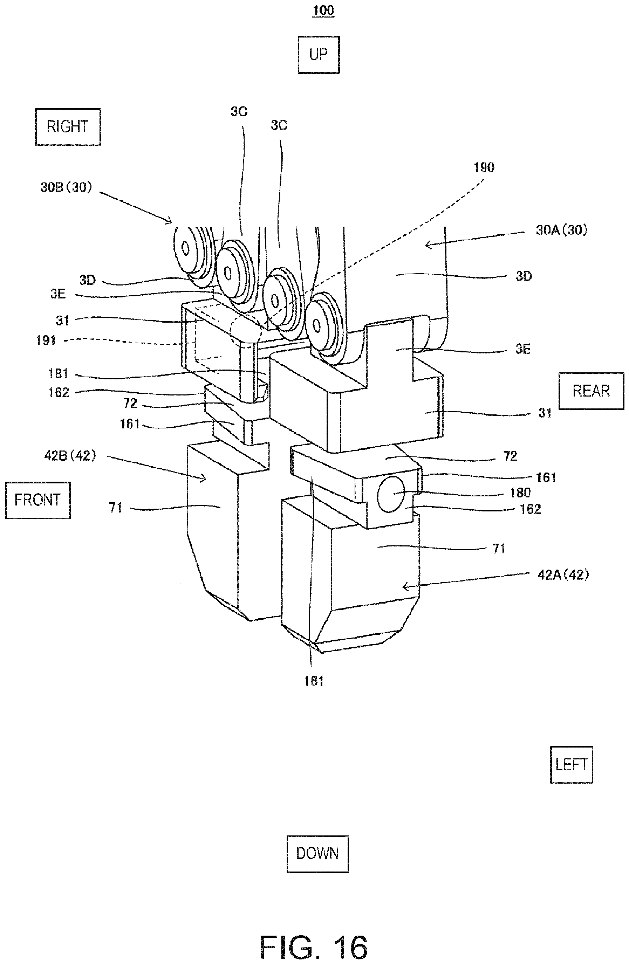

Below, one example of a robot system according to Embodiment 2 is described with reference to Fig. 16.

### [Configuration of Robot System]

Fig. 16 is a schematic diagram illustrating an outline configuration of the finger member 30 and the claw member 42 of the robot system 100 according to Embodiment 2.

As illustrated in Fig. 16, the robot system 100 according to Embodiment 2 is similar in the fundamental configuration to the robot system 100 according to Embodiment 1, but it differs in that a concave to-be-engaged part 181 extending in the first direction is formed in the tip-end part (connecting member 3E) of the finger member 30, and in that an engaging part 161 is formed in the base-end part 72 of the claw member 42.

In detail, the base-end part 72 of the claw member 42 is formed in a rectangular parallelepiped shape. The flange-shaped engaging part 161 extending in the left-and-right direction is formed in each of an upper-end part of a front surface and an upper-end part of a rear surface of the base-end part 72.

The engaging part 161 is formed in a tapered shape. In detail, the engaging part 161 on the claw member 42A side is formed in the tapered shape so that the left surface becomes smaller in the area than the right surface. Further, the engaging part 161 on the claw member 42B side is formed in the tapered shape so that the right surface becomes smaller in the area than the left surface.

Further, a first lock mechanism 180 is provided to the left surface of the base-end part 72 on the claw member 42A side (an outer surface; a tip-end part 162 of the engaging part 161). Similarly, the first lock mechanism 180 is provided to the right surface of the base-end part 72 on the claw member 42B side (an outer surface; a tip-end part 162 of the engaging part 161). Moreover, as will be described later, a first lock mechanism 190 is provided to a first stopper part 191 of the finger member 30.

The first lock mechanisms 180 and 190 may be in any kind of forms, as long as they can stop the claw member 42 so that the claw member 42 does not fall by its own weight, when the tip-end part 162 of to-be-engaged part 181 is oriented downwardly. Each of the first lock mechanisms 180 and 190 may be comprised of a magnet, or may be comprised of a ball plunger, for example.

The connecting member 3E of the finger member 30 is formed in an inverted T-shape when seen in the left-and-right direction, and has a lower-end part 31. The concave to-be-engaged part 181 is formed in the lower-end part 31 of the finger member 30A, which opens on the right surface side and extends in the left-and-right direction (first direction). Similarly, the concave to-be-engaged part 181 is formed in the lower-end part 31 of the finger member 30B, which opens on the left-surface side and extends in the left-and-right direction.

The to-be-engaged part 181 engages with the engaging part 161 so that the claw member 42 is attached to the finger member 30. Note that the inner circumferential surface of the to-be-engaged part 181 may be formed in a tapered shape so that it fits to the engaging part 161.

Further, the bottom surface of the recess which constitutes the to-be-engaged part 181 constitutes the first stopper part 191. The first stopper part 191 limits the movement of the finger member 30 by the tip-end part 162 of the engaging part 161 contacting the first stopper part 191. Therefore, it makes the positioning of the finger member 30 and the claw member 42 easier.

Further, the first stopper part 191 is provided with the first lock mechanism 190. The first lock mechanism 190 can fix the claw member 42 to the finger member 30 in collaboration with the first lock mechanism 180.

The robot system 100 according to Embodiment 2 configured in this way also provides similar operation and effects to the robot system 100 according to Embodiment 1.

Note that, although in Embodiment 2 the actuator 22 operates the pair of finger members 30A and 30B so that the pair of finger members 30A and 30B approach/separate to/from each other similarly to the robot system 100 according to Embodiment 1, it is not limited to this configuration.

Similarly to the robot system 100 of Modification 1 of Embodiment 1, at least one finger member 30 among the pair of finger members 30A and 30B may be operated by the actuator. In this case, the other finger member 30 may be fixed to the main body 21 of the hand 20.

The robot system 100 according to Embodiment 2 includes the hand 20 provided with the pair of finger members 30 and the actuator 22 which operates the pair of finger members 30 so that the tip-end parts of the pair of finger members 30 approach or separate to/from each other, the control device 50, and the pair of claw members 42 each configured to be attachable and detachable to/from the corresponding finger member 30. The base-end part 72 of each claw member 42 is provided with the engaging part 161, and the tip-end part of each finger member 30 is provided with the to-be-engaged part 181 which may engage with the engaging part 161. The to-be-engaged part 181 has a concave shape extending in the direction from the tip-end part of one finger member 30 to the tip-end part of the other finger member 30. The control device 50 operates the finger members 30 so that the pair of claw members 42 are located between the pair of finger members 30, and then operates them so that the pair of finger members 30 approach each other to engage the to-be-engaged part 181 with the engaging part 161.

Further, in the robot system 100 according to Embodiment 2, the engaging part 161 may be formed in a tapered shape.

Moreover, in the robot system 100 according to Embodiment 2, the finger member 30 may be provided with a second stopper part so that it opposes to the tip end of the engaging part 161 of the claw member 42.

Further, in the robot system 100 according to Embodiment 2, the second stopper part of the finger member 30 and the tip-end part of the engaging part 161 of the claw member 42 may be each provided with a second lock mechanism.

The robot system 100 according to Embodiment 2 may further be provided with the support member 200 which accommodates the claw members 42 in the state where the extending direction of the claw members 42 is oriented in the vertical direction, when the claw members 42 are not attached to the finger members 30. The support member 200 may be provided with the recess 203, and the tip-end parts 71 of the claw members 42 may be inserted in the recess 203 of the support member 200.

Further, in the robot system 100 according to Embodiment 2, the plurality of kinds of pairs of claw members 42 may be accommodated in the support member 200 so that they are lined up.

Further, in the robot system 100 according to Embodiment 2, the actuator may be configured to operate at least one of the pair of finger members 30.

Further, in the robot system 100 according to Embodiment 2, the other of the pair of finger members 30 may be fixed to the main body 21 of the main body 21 of the hand 20.

The method of operating the robot according to Embodiment 2 includes the hand 20 provided with the pair of finger members 30 and the actuator 22 which operates the pair of finger members 30 so that the tip-end parts of the pair of finger members 30 approach or separate to/from each other, the control device 50, and the pair of claw members 42 each configured to be attachable and detachable to/from the corresponding finger member 30. The base-end part 72 of each claw member 42 is provided with the engaging part 161. The tip-end part of each finger member 30 is provided with the to-be-engaged part 181 which may engage with the engaging part 161. The to-be-engaged part 181 has a concave shape extending in the direction from the tip-end part of one finger member 30 to the tip-end part of the other finger member 30. The method operates the finger members 30 so that the pair of claw members 42 are located between the pair of finger members 30, and then operates them so that the pair of finger members 30 approach each other to engage the to-be-engaged part 181 with the engaging part 161.

Therefore, even if the orientation of the hand 20 is changed, the claw member 42 does not fall out from the finger member 30. For example, when the orientation of the hand 20 is changed so that the pair of finger members 30 are lined up in the vertical direction, the claw members 42 are located so that they are lined up vertically. Thus, even if the claw member 42 located above moves downwardly by its own weight, it will contact the other claw member 42 located below. Therefore, the downward movement of one claw member 42 can be suppressed, and it is prevented that the claw member 42 falls out from the finger member 30.

Further, in the method of operating the robot according to Embodiment 2, the engaging part 161 may be formed in a tapered shape.

Further, the method of operating the robot according to Embodiment 2 may further be provided with the support member 200 which accommodates the claw members 42 in the state where the extending direction of the claw members 42 is oriented in the vertical direction, when the claw members 42 are not attached to the finger members 30. The support member 200 may be provided with the recess 203. The tip-end parts 71 of the claw members 42 may be inserted in the recess 203 of the support member 200.

Further, in the method of operating the robot according to Embodiment 2, the finger member 30 may be provided with the second stopper part so that it opposes to the tip end of the engaging part 161 of the claw member 42.

Further, in the method of operating the robot according to Embodiment 2, the second stopper part of the finger member 30, and the tip-end part of the engaging part 161 of the claw member 42 may be each provided with the second lock mechanism.

Further, in the method of operating the robot according to Embodiment 2, the plurality of kinds of pairs of claw members 42 may be accommodated in the support member 200 so that they are lined up.

Further, in the method of operating the robot according to Embodiment 2, the actuator may be configured to operate at least one of the pair of finger members 30.

Further, in the method of operating the robot according to Embodiment 2, the other of the pair of finger members 30 may be fixed to the main body 21 of the hand.

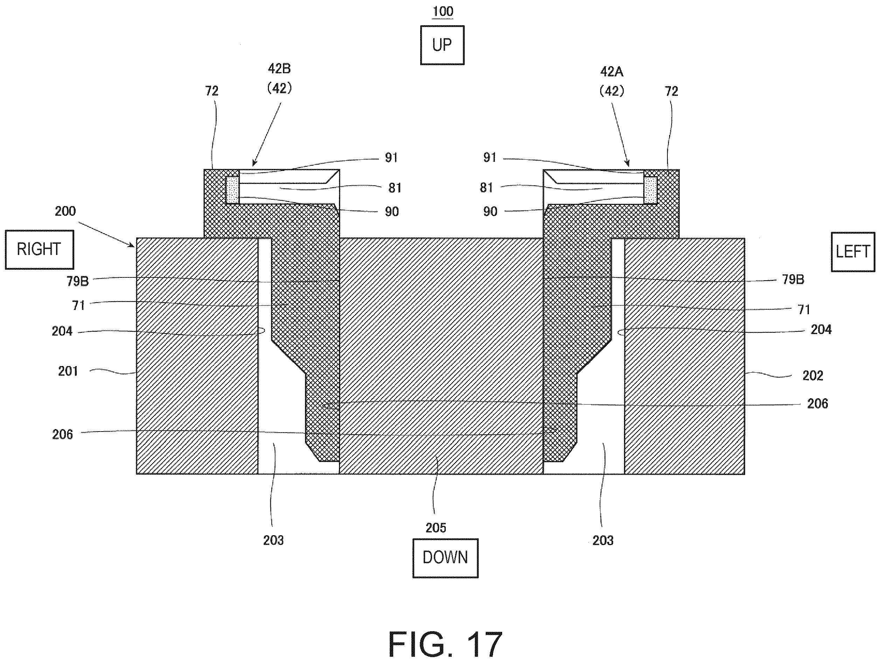

Below, one example of a robot system according to Embodiment 3 is described with reference to Figs. 17 to 20.

### [Configuration of Robot System]

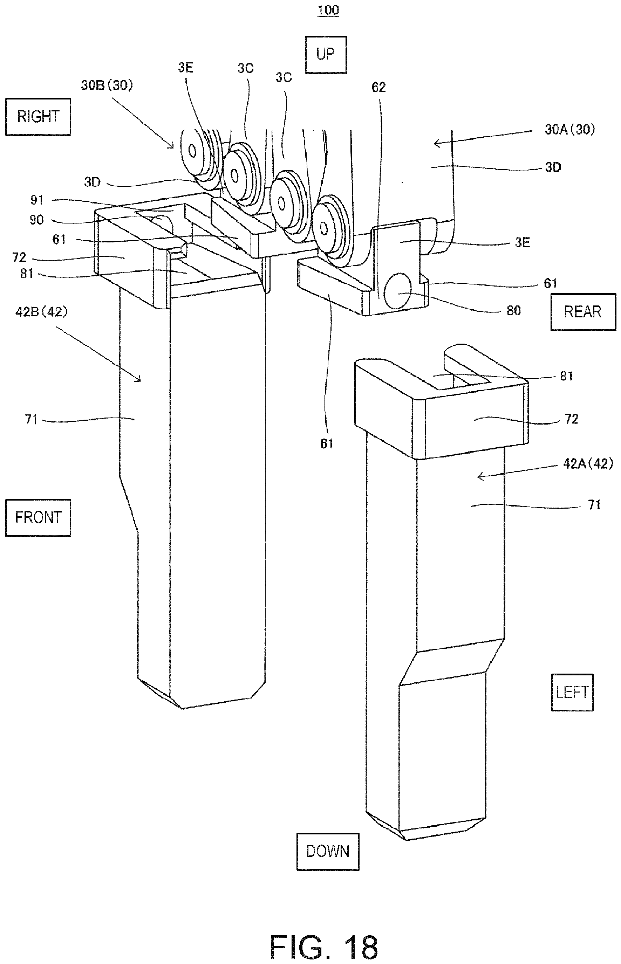

Fig. 17 is a cross-sectional view illustrating an outline configuration of the support member 200 and the claw member 42 of the robot system 100 according to Embodiment 3. Fig. 18 is a schematic diagram illustrating an outline configuration of the finger member 30 and the claw member 42 of the robot system 100 according to Embodiment 3. Note that, in Fig. 17, the up-and-down direction and the left-and-right direction of the robot system 100 are indicated as the up-and-down direction and the left-and-right direction in the drawing. Further, in Fig. 18, the front-and-rear direction, the up-and-down direction, and the left-and-right direction of the robot system 100 are indicated as the front-and-rear direction, the up-and-down direction, and the left-and-right direction in the drawing.

As illustrated in Figs. 17 and 18, the robot system 100 according to Embodiment 3 is similar in the fundamental configuration to the robot system 100 according to Embodiment 1, but it differs in that a pair of the recesses 203 are formed in the support member 200, and in that the claw members 42 corresponding to the pair of recesses 203 are disposed.

In detail, the support member 200 includes the first support member 201, the second support member 202, and a third support member 205 which extend in the left-and-right direction, and the third support member 205 is disposed between the first support member 201 and the second support member 202. Further, a space between the first support member 201 and the third support member 205 and a space between the second support member 202 and the third support member 205 each constitute the recess 203.

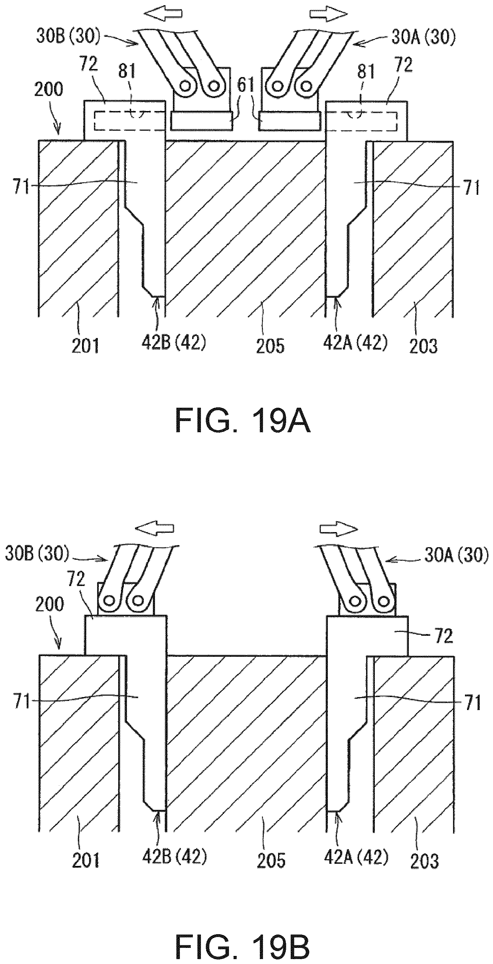

In Figs. 19A and 19B, a situation where the claw members 42 accommodated in the support member 200 are attached to the finger members 30 is illustrated. First, the control device 50 operates the robot 101 to move the finger members 30A and 30B so that the pair of finger members 30A and 30B are located between the pair of claw members 42 (Fig. 19A). Next, the control device 50 operates the actuator 22 to bring the pair of finger members 30A and 30B closer to the corresponding claw members 42. In this form, the pair of finger members 30A and 30B are separated from each other. Thus, each engaging part 81 engages with the corresponding to-be-engaged part 61 (Fig. 19B). Therefore, the claw members 42 are attached to the finger members 30.

### [Operation and Effects of Robot System]

Next, operation and effects of the robot system 100 according to Embodiment 3 are described in detail with reference to Figs. 17 to 20. Note that the following operation is performed by the arithmetic processor of the control device 50 reading the program stored in the memory.

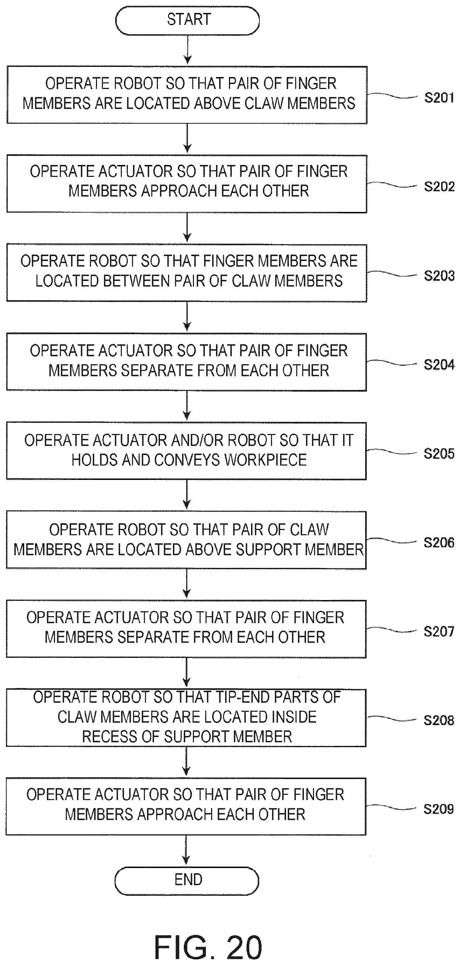

Fig. 20 is a flowchart illustrating one example of operation of the robot system 100 according to Embodiment 3.

First, suppose that a worker (operator) operates an operation terminal (not illustrated) so that an instruction signal for performing a conveying work to convey a workpiece is inputted into the control device 50.

Then, as illustrated in Fig. 20, the control device 50 operates the robot 101 so that the pair of finger members 30A and 30B are located above the claw members 41 (Step S201). Next, the control device 50 operates the actuator 22 so that the pair of finger members 30A and 30B approach each other (Step S202).

Next, the control device 50 operates the robot 101 so that the pair of finger members 30A and 30B are located between the pair of claw members 42A and 42B (Step S203). In more detail, the control device 50 operates the robot 101 so that the tip-end part 62 of the to-be-engaged part 61 of the finger member 30 opposes to the opening of the engaging part 81 of the claw member 42. The state of the finger member 30 and the claw member 42 at this time is illustrated in Fig. 19A described above.

Next, the control device 50 operates the actuator 22 so that the pair of finger members 30A and 30B separate from each other (Step S204). The tip ends of the pair of finger members 30A and 30B approach the corresponding claw members 42. Therefore, the to-be-engaged part 61 of the finger member 30 engages with the engaging part 81 of the claw member 41 so that the claw member 41 is attached to the finger member 30. The state of the finger member 30 and the claw member 42 at this time is illustrated in Fig. 19B described above.

Here, the movement of the finger member 30 is limited by the tip-end part 62 of the to-be-engaged part 61 contacting the first stopper part 91. Therefore, it makes the positioning of the finger member 30 and the claw member 42 easier. Further, by the first lock mechanism 80 contacting the first lock mechanism 90, the claw member 42 is fixed to the finger member 30.

Next, the control device 50 operates the actuator 22 and/or the robot 101 so that it holds and conveys a workpiece (Step S205). Note that, in Embodiment 3, as the workpiece held by the robot 101, a cylindrical or tubular member, such as the workpiece W1 illustrated in Fig. 1 etc., is assumed, for example. That is, the robot 101 according to Embodiment 3 is configured to hold the workpiece from the inner circumferential surface side.

Next, the control device 50 makes the robot 101 perform operation for releasing the claw members 42. In detail, the control device 50 operates the robot 101 so that the pair of claw members 42A and 42B are located above the support member 200 (Step S206).

Next, the control device 50 operates the actuator 22 so that the pair of finger members 30A and 30B separate from each other (Step S207). Therefore, the tip-end parts of the pair of claw members 42A and 42B can be located above the opening of the recesses 203 of the support member 200.

Next, the control device 50 operates the robot 101 so that the tip-end parts 71 of the claw members 42 are located in the recess 203 of the support member 200 (Step S208). In detail, the control device 50 operates the robot 101 so that the claw members 42 are moved downwardly and are inserted into the recess 203.

Next, the control device 50 operates the actuator 22 so that the pair of finger members 30A and 30B approach each other (Step S209), and then ends this program.

Thus, although the pair of claw members 42A and 42B move so that they approach each other according to the pair of finger members 30A and 30B, they become impossible to move in the approaching direction by the side surfaces 79B inside the tip-end parts 71 of the claw members 42A and 42B contacting the side surfaces 206 of the third support member 205. Thus, the pair of finger members 30A and 30B can release the claw members 42, and the claw members 42 are accommodated in the support member 200.

The robot system 100 according to Embodiment 3 configured in this way also provides similar operation and effects to the robot system 100 according to Embodiment 1.

Note that, although in Embodiment 3 the actuator 22 operates the pair of finger members 30A and 30B so that the pair of finger members 30A and 30B approach and separate to/from each other similarly to the robot system 100 according to Embodiment 1, it is not limited to this configuration.

Similarly to the robot system 100 of Modification 1 of Embodiment 1, at least one of the pair of finger members 30A and 30B may be operated by the actuator 22. In this case, the other of the finger members 30A and 30B may be fixed to the main body 21 of the hand 20.

The robot system 100 according to Embodiment 3 includes the hand 20 provided with the pair of finger members 30 and the actuator 22 which operates the pair of finger members 30 so that the tip-end parts of the pair of finger members 30 approach or separate to/from each other, the control device 50, and the pair of claw members 42 each configured to be attachable and detachable to/from the corresponding finger member 30. The base-end part 72 of each claw member 42 is provided with the engaging part 81, and the tip-end part of each finger member 30 is provided with the to-be-engaged part 61 which may engage with the engaging part 81. The engaging part 81 has a concave shape extending in the direction from the tip-end part of one finger member 30 to the tip-end part of the other finger member 30. The control device 50 operates the finger members 30 so that the pair of finger members 30 are located between the pair of claw members 42, and then operates them so that each of the pair of finger members 30 is brought closer to the corresponding claw member 42 to engage the to-be-engaged part 61 with the engaging part 81. In this form, the control device 50 operates the pair of finger members 30 so that the pair of finger members 30 separate from each other to engage the to-be-engaged part 61 with the engaging part 81.

The robot system 100 according to Embodiment 3 may further be provided with the support member 200 which accommodates the claw members 42 in the state where the extending direction of the claw members 42 is oriented in the vertical direction, when the claw members 42 are not attached to the finger members 30. The support member 200 may be provided with the recess 203, and the tip-end parts 71 of the claw members 42 may be inserted in the recess 203 of the support member 200.

Further, in the robot system 100 according to Embodiment 3, the to-be-engaged part 61 may be formed in a tapered shape.

Further, in the robot system 100 according to Embodiment 3, the claw member 42 may be provided with the first stopper part so that it opposes to the tip end of the to-be-engaged part 61 of the finger member 30.

Further, in the robot system 100 according to Embodiment 3, the first stopper part of the claw member 42 and the tip-end part of the to-be-engaged part 61 of the finger member 30 may be each provided with the first lock mechanism.

Further, in the robot system 100 according to Embodiment 3, the actuator may be configured to operate at least one of the pair of finger members 30.

Further, in the robot system 100 according to Embodiment 3, the other of the pair of finger members 30 may be fixed to the main body 21 of the hand 20.

The method of operating the robot system 100 according to Embodiment 3 includes the hand 20 provided with the pair of finger members 30 and the actuator 22 which operates the pair of finger members 30 so that the tip-end parts of the pair of finger members 30 approach or separate to/from each other, the control device 50, and the pair of claw members 42 each configured to be attachable and detachable to/from the corresponding finger member 30. The base-end part 72 of each claw member 42 is provided with the engaging part 81. The tip-end part of each finger member 30 is provided with the to-be-engaged part 61 which may engage with the engaging part 81. The engaging part 81 has a concave shape extending in the direction from the tip-end part of one finger member 30 to the tip-end part of the other finger member 30. The method operates the finger members 30 so that the pair of finger members 30 are located between the pair of claw members 42, and then operates them so that the pair of finger members 30 separate from each other to engage the to-be-engaged part 61 with the engaging part 81.

Further, the method of operating the robot system 100 according to Embodiment 3 may further be provided with the support member 200 which accommodates the claw members 42 in the state where the extending direction of the claw members 42 is oriented in the vertical direction, when the claw members 42 are not attached to the finger members 30. The support member 200 may be provided with the recess 203, and the tip-end parts 71 of the claw members 42 may be inserted in the recess 203 of the support member 200.

Further, in the method of operating the robot system 100 according to Embodiment 3, the to-be-engaged part 61 may be formed in a tapered shape.

In the method of operating the robot system 100 according to Embodiment 3, the claw members 41A and 41B may be provided with the first stopper parts 91 so that they oppose to the tip ends of the to-be-engaged parts 61 of the finger members 30A and 30B.

Further, in the method of operating the robot system 100 according to Embodiment 3, the first stopper part 91 of the claw members 41A and 41B, and the tip-end part of the to-be-engaged part 61 of the finger members 30A and 30B may be each provided with the first lock mechanism.

### (Embodiment 4)

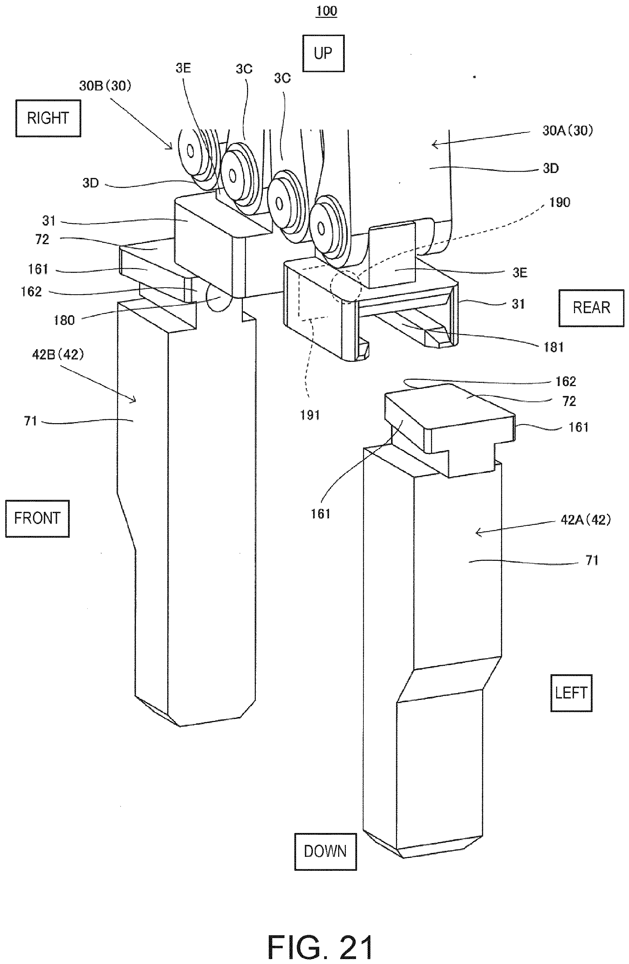

Below, one example of the robot system 100 according to Embodiment 4 is described with reference to Fig. 21.

### [Configuration of Robot System]

Fig. 21 is a schematic diagram illustrating an outline configuration of the finger member 30 and the claw member 42 of the robot system 100 according to Embodiment 4.

As illustrated in Fig. 21, the robot system 100 according to Embodiment 4 is similar in the fundamental configuration to the robot system 100 according to Embodiment 3, but it differs in that a concave to-be-engaged part 181 extending in the first direction is formed in the tip-end part (connecting member 3E) of the finger member 30, and in that the engaging part 161 is formed in the base-end part 72 of the claw member 42.

In detail, the base-end part 72 of the claw member 42 is formed in a rectangular parallelepiped shape. The flange-shaped engaging part 161 extending in the left-and-right direction is formed in each of the upper-end part of the front surface and the upper-end part of the rear surface of the base-end part 72.

The engaging part 161 is formed in a tapered shape. In detail, the engaging part 161 on the claw member 42A side is formed in the tapered shape so that the right surface becomes smaller in the area than the left surface. Further, the engaging part 161 on the claw member 42B side is formed in the tapered shape so that the left surface becomes smaller in the area than the right surface.

Further, the right surface of the base-end part 72 on the claw member 42A side (an inner surface; the tip-end part 162 of the engaging part 161) is provided with the first lock mechanism 180. Similarly, the left surface of the base-end part 72 on the claw member 42B side (an inner surface; the tip-end part 162 of the engaging part 161) is provided with the first lock mechanism 180. Further, as will be described later, the first stopper part 191 of the finger member 30 is provided with the first lock mechanism 190.

The first lock mechanisms 180 and 190 may be in any kind of forms, as long as they can stop the claw member 42 so that the claw member 42 does not fall by its own weight when the tip-end part 162 of the engaging part 161 is oriented downwardly. The first lock mechanisms 180 and 190 may be comprised of magnets, or may be comprised of ball plungers, for example.

The connecting member 3E of the finger member 30 is formed in an inverted T-shape when seen in the left-and-right direction, and has the lower-end part 31. The concave to-be-engaged part 181 which opens on the left-surface side and extends in the left-and-right direction (first direction) is formed in the lower-end part 31 of the finger member 30A. Similarly, the concave to-be-engaged part 181 which opens on the right-and-left surface sides and extends in the left-and-right direction is formed in the lower-end part 31 of the finger member 30B.

The to-be-engaged part 181 engages with the engaging part 161 so that the claw member 42 is attached to the finger member 30. Note that the inner circumferential surface of the to-be-engaged part 181 may be formed in a tapered shape so that it fits with the engaging part 161.

The bottom surface of the recess which constitutes the to-be-engaged part 181 constitutes the first stopper part 191. The first stopper part 191 limits the movement of the finger member 30 by contacting the tip-end part 162 of the engaging part 161. Therefore, it makes the positioning of the finger member 30 and the claw member 42 easier.

Further, the first stopper part 191 is provided with the first lock mechanism 190. The first lock mechanism 190 can fix the claw member 42 to the finger member 30 in collaboration with the first lock mechanism 180.

The robot system 100 according to Embodiment 4 configured in this way also provides similar operation and effects to the robot system 100 according to Embodiment 3.

Note that, although in Embodiment 4 the actuator 22 operates the pair of finger members 30 so that the pair of finger members 30A and 30B approach and separate to/from each other, similarly to the robot system 100 according to Embodiment 1, it is not limited to this configuration.

Similarly to the robot system 100 of Modification 1 of Embodiment 1, at least one of the pair of finger members 30A and 30B may be operated by the actuator 22. In this case, the other finger member 30 may be fixed to the main body 21 of the hand 20.

The robot system 100 according to Embodiment 4 includes the hand 20 provided with the pair of finger members 30 and the actuator 22 which operates the pair of finger members 30 so that the tip-end parts of the pair of finger members 30 approach or separate to/from each other, the control device 50, and the pair of claw members 42 each configured to be attachable and detachable to/from the corresponding finger member 30. The base-end part 72 of each claw member 42 is provided with the engaging part 161, and the tip-end part of each finger member 30 is provided with the to-be-engaged part 181 which may engage with the engaging part 161. The to-be-engaged part 181 has a concave shape extending in the direction from the tip-end part of one finger member 30 to the tip-end part of the other finger member 30. The control device 50 operates the finger members 30 so that the pair of finger members 30 are located between the pair of claw members 42, and then operates them so that each of the pair of finger members 30 is brought closer to the corresponding claw member 42 to engage the to-be-engaged part 181 with the engaging part 161. In this form, the control device 50 operates the pair of finger members 30 so that the pair of finger members 30 separate from each other to engage the to-be-engaged part 181 with the engaging part 161.

The robot system 100 according to Embodiment 4 may further be provided with the support member 200 which accommodates the claw members 42 in the state where the extending direction of the claw members 42 is oriented in the vertical direction, when the claw members 42 are not attached to the finger members 30. The support member 200 may be provided with the recess 203, and the tip-end parts 71 of the claw members 42 may be inserted in the recess 203 of the support member 200.

Further, in the robot system 100 according to Embodiment 4, the engaging part 161 may be formed in a tapered shape.

Further, in the robot system 100 according to Embodiment 4, the finger member 30 may be provided with the second stopper part so that it opposes to the tip end of the engaging part 161 of the claw member 42.

Further, in the robot system 100 according to Embodiment 4, the second stopper part of the finger member 30 and the tip-end part of the engaging part 161 of the claw member 42 may be each provided with the second lock mechanism.

Further, in the robot system 100 according to Embodiment 4, the actuator may be configured to operate at least one of the pair of finger members 30.

Further, in the robot system 100 according to Embodiment 4, the other of the pair of finger members 30 may be fixed to the main body 21 of the hand 20.

The method of operating the robot system 100 according to Embodiment 4 includes the hand 20 provided with the pair of finger members 30 and the actuator 22 which operates the pair of finger members 30 so that the tip-end parts of the pair of finger members 30 approach or separate to/from each other, the control device 50, and the pair of claw members 42 each configured to be attachable and detachable to/from the corresponding finger member 30. The base-end part 72 of each claw member 42 is provided with the engaging part 161. The tip-end part of each finger member 30 is provided with the to-be-engaged part 181 which may engage with the engaging part 161. The to-be-engaged part 181 has a concave shape extending in the direction from the tip-end part of one finger member 30 to the tip-end part of the other finger member 30. The method operates the finger members 30 so that the pair of finger members 30 are located between the pair of claw members 42, and then operates them so that the pair of finger members 30 separate from each other to engage the to-be-engaged part 181 with the engaging part 161.

Further, the method of operating the robot system 100 according to Embodiment 4 may further be provided with the support member 200 which accommodates the claw members 42 in the state where the extending direction of the claw members 42 is oriented in the vertical direction when the claw members 42 are not attached to the finger members 30. The support member 200 may be provided with the recess 203, and the tip-end parts 71 of the claw members 42 may be inserted in the recess 203 of the support member 200.

Further, in the method of operating the robot system 100 according to Embodiment 4, the engaging part 161 may be formed in a tapered shape.

Further, in the method of operating the robot system 100 according to Embodiment 4, the finger member 30 may be provided with the second stopper part so that it opposes to the tip end of the engaging part 161 of the claw member 42.

Further, in the method of operating the robot system 100 according to Embodiment 4, the second stopper part of the finger member 30 and the tip-end part of the engaging part 161 of the claw member 42 may each be provided with the second lock mechanism.

Further, in the method of operating the robot system 100 according to Embodiment 4, the actuator may be configured to operate at least one of the pair of finger members 30.

Further, in the method of operating the robot system 100 according to Embodiment 4, the other of the pair of finger members 30 may be fixed to the main body 21 of the hand 20.

It is apparent for the person skilled in the art that many improvements or other embodiments of the present disclosure are possible from the above description. Therefore, the above description is to be interpreted only as illustration, and it is provided in order to teach the person skilled in the art the best mode to implement the present disclosure. The details of the structure and/or the function may be changed substantially, without departing from the present disclosure.

### [Disclosed Items]

The following is disclosure of desirable embodiments.

### [Item 1]

A robot system, comprising:
a hand provided with a pair of finger members and an actuator that operates the pair of finger members so that tip-end parts of the pair of finger members approach or separate to/from each other;
a control device; and
a pair of claw members each configured to be attachable and detachable to/from the corresponding finger member,
wherein a base-end part of each of the claw members is provided with an engaging part,
wherein the tip-end part of each of the finger members is provided with a to-be-engaged part that is capable of engaging with the engaging part,
wherein one of the engaging part and the to-be-engaged part has a concave shape extending in a direction from the tip-end part of one of the finger members to the tip-end part of the other finger member, and
wherein the control device operates the finger members so that one of the pair of finger members and the pair of claw members are located between the other pair, and then operates the finger members so that each of the pair of finger members is brought closer to the corresponding claw member to engage the to-be-engaged part with the engaging part.

### [Item 2]

The robot system of item 1, wherein the control device operates the finger members so that the pair of claw members are located between the pair of finger members, and then operates the finger members so that the pair of finger members approach each other to bring each of the pair of finger members closer to the corresponding claw member.

### [Item 3]

The robot system of item 1, wherein the control device operates the finger members so that the pair of finger members are located between the pair of claw members, and then operates the finger members so that the pair of finger members separate from each other to bring each of the pair of finger members closer to the corresponding claw member.

### [Item 4]

The robot system of any one of items 1 to 3, further comprising a support member that accommodates the claw members in a state where an extending direction of the claw members is oriented in the vertical direction, when the claw members are not attached to the finger members,
wherein the support member is provided with a recess, and
wherein tip-end parts of the claw members are inserted in the recess of the support member.

### [Item 5]

The robot system of item 4, wherein a plurality of kinds of pairs of claw members are accommodated in the support member so that the plurality of kinds of pairs of claw members are lined up.

### [Item 6]

The robot system of any one of items 1 to 5, wherein the engaging part has a concave shape extending in a direction from the tip-end part of one of the finger members to the tip-end part of the other finger member.

### [Item 7]

The robot system of item 5, wherein the engaging part has a tapered shape.

### [Item 8]

The robot system of item 6 or 7, wherein the claw member is provided with a first stopper part so that the first stopper part opposes to a tip end of the to-be-engaged part.

### [Item 9]

The robot system of item 8, wherein the first stopper part and the tip-end part of the to-be-engaged part are each provided with a first lock mechanism.

### [Item 10]

The robot system of any one of items 1 to 5, wherein the to-be-engaged part has a concave shape extending in a direction from the tip-end part of one of the finger members to the tip-end part of the other finger member, and wherein the engaging part has a tapered shape.

### [Item 11]

The robot system of any one of items 1 to 10, wherein the actuator operates at least one of the pair of finger members.

### [Item 12]

The robot system of item 11, wherein the hand is further provided with a main body, and the other finger member of the pair of finger members is fixed to the main body.

### [Item 13]

A method of operating a robot system comprising:
a hand 20 provided with a pair of finger members and an actuator 22 that operates the pair of finger members so that tip-end parts of the pair of finger members approach or separate to/from each other;
a control device; and
a pair of claw members each configured to be attachable and detachable to/from the corresponding finger member,
wherein a base-end part of each of the claw members is provided with an engaging part,
wherein the tip-end part of each of the finger members is provided with a to-be-engaged part that is capable of engaging with the engaging part, and
wherein one of the engaging part and the to-be-engaged part has a concave shape extending in a direction from the tip-end part of one of the finger members to the tip-end part of the other finger member,
the method comprising the steps of:
   operating the finger members so that one of the pair of finger members and the pair of claw members are located between the other pair; and
   then operating the finger members so that each of the pair of finger members is brought closer to the corresponding claw member to engage the to-be-engaged part with the engaging part.

### [Item 14]

The method of operating the robot system of item 13, comprising the steps of:
operating the finger members so that the pair of claw members are located between the pair of finger members; and
then operating the finger members so that the pair of finger members approach each other to bring each of the pair of finger members closer to the corresponding claw member.

### [Item 15]

The method of operating the robot system of item 13, wherein the control device operates the finger members so that the pair of finger members are located between the pair of claw members, and then operates the finger members so that the pair of finger members separate from each other to bring each of the pair of finger members closer to the corresponding claw member.

### DESCRIPTION OF REFERENCE CHARACTERS

- 3A: Link Member
- 3B: Link Member
- 3C: Link Member
- 3D: Link Member
- 3E: Connecting Member
- 11a: First Link
- 11b: Second Link
- 11c: Third Link
- 11d: Fourth Link
- 11e: Fifth Link
- 11f: Sixth Link
- 12: Mechanical Interface
- 15: Pedestal
- 20: Hand
- 21: Main Body
- 22: Actuator
- 30: Finger Member
- 30A: Finger Member
- 30B: Finger Member
- 31: Lower-end Part
- 41: Claw Member
- 41A: Claw Member
- 41B: Claw Member
- 42: Claw Member
- 42A: Claw Member
- 42B: Claw Member
- 43: Claw Member
- 43A: Claw Member
- 43B: Claw Member
- 44: Claw Member
- 44A: Claw Member
- 44B: Claw Member
- 45: Claw Member
- 45A: Claw Member
- 45B: Claw Member
- 50: Control Device
- 60: Movable Body
- 61: To-be-engaged Part
- 62: Tip-end Part
- 71: Tip-end Part
- 71A: Contact Surface
- 72: Base-end Part
- 73: Recess
- 74: Groove
- 75: Notch
- 76A: Foot Part
- 76B: Foot Part
- 77: Tip-end Part
- 78: Base-end Part
- 79A: Side Surface
- 79B: Side Surface
- 80: First Lock Mechanism
- 81: Engaging Part
- 85: First Part
- 86: Second Part
- 87: Contact Surface
- 88: Slit
- 90: First Lock Mechanism
- 91: First Stopper Part
- 100: Robot System
- 101: Robot
- 161: Engaging Part
- 162: Tip-end Part
- 180: First Lock Mechanism
- 181: To-be-engaged Part
- 190: First Lock Mechanism
- 191: First Stopper Part
- 200: Support Member
- 201: First Support Member
- 202: Second Support Member
- 203: Recess
- 204: Inner Surface
- 205: Third Support Member
- 206: Side Surface
- 301A: Rail Member
- 301B: Rail Member
- JT1: First Joint
- JT2: Second Joint
- JT3: Third Joint
- JT4: Fourth Joint
- JT5: Fifth Joint
- JT6: Sixth Joint
- W1: Workpiece
- W2: Workpiece
- W3: Workpiece
- W4: Workpiece
- W5: Workpiece

## Claims

1. A robot system, comprising:
a hand provided with a pair of finger members and an actuator that operates the pair of finger members so that tip-end parts of the pair of finger members approach or separate to/from each other;
a control device; and
a pair of claw members each configured to be attachable and detachable to/from the corresponding finger member,
wherein a base-end part of each of the claw members is provided with an engaging part,
wherein the tip-end part of each of the finger members is provided with a to-be-engaged part that is capable of engaging with the engaging part,
wherein one of the engaging part and the to-be-engaged part has a concave shape extending in a direction from the tip-end part of one of the finger members to the tip-end part of the other finger member, and
wherein the control device operates the finger members so that one of the pair of finger members and the pair of claw members are located between the other pair, and then operates the finger members so that each of the pair of finger members is brought closer to the corresponding claw member to engage the to-be-engaged part with the engaging part.

2. The robot system of claim 1, wherein the control device operates the finger members so that the pair of claw members are located between the pair of finger members, and then operates the finger members so that the pair of finger members approach each other to bring each of the pair of finger members closer to the corresponding claw member.

3. The robot system of claim 1, wherein the control device operates the finger members so that the pair of finger members are located between the pair of claw members, and then operates the finger members so that the pair of finger members separate from each other to bring each of the pair of finger members closer to the corresponding claw member.

4. The robot system of any one of claims 1 to 3, further comprising a support member that accommodates the claw members in a state where an extending direction of the claw members is oriented in the vertical direction, when the claw members are not attached to the finger members,
wherein the support member is provided with a recess, and
wherein tip-end parts of the claw members are inserted in the recess of the support member.

5. The robot system of claim 4, wherein a plurality of kinds of pairs of claw members are accommodated in the support member so that the plurality of kinds of pairs of claw members are lined up.

6. The robot system of any one of claims 1 to 5, wherein the engaging part has a concave shape extending in a direction from the tip-end part of one of the finger members to the tip-end part of the other finger member.

7. The robot system of claim 6, wherein the engaging part has a tapered shape.

8. The robot system of claim 6 or 7, wherein the claw member is provided with a first stopper part so that the first stopper part opposes to a tip end of the to-be-engaged part.

9. The robot system of claim 8, wherein the first stopper part and the tip-end part of the to-be-engaged part are each provided with a first lock mechanism.

10. The robot system of any one of claims 1 to 5, wherein the to-be-engaged part has a concave shape extending in a direction from the tip-end part of one of the finger members to the tip-end part of the other finger member, and
wherein the engaging part has a tapered shape.

11. The robot system of any one of claims 1 to 10, wherein the actuator operates at least one of the pair of finger members.

12. The robot system of claim 11, wherein the hand is further provided with a main body, and the other finger member of the pair of finger members is fixed to the main body.

13. A method of operating a robot system comprising:
a hand provided with a pair of finger members and an actuator that operates the pair of finger members so that tip-end parts of the pair of finger members approach or separate to/from each other;
a control device; and
a pair of claw members each configured to be attachable and detachable to/from the corresponding finger member,
wherein a base-end part of each of the claw members is provided with an engaging part,
wherein the tip-end part of each of the finger members is provided with a to-be-engaged part that is capable of engaging with the engaging part, and
wherein one of the engaging part and the to-be-engaged part has a concave shape extending in a direction from the tip-end part of one of the finger members to the tip-end part of the other finger member,
the method comprising the steps of:
operating the finger members so that one of the pair of finger members and the pair of claw members are located between the other pair; and
then operating the finger members so that each of the pair of finger members is brought closer to the corresponding claw member to engage the to-be-engaged part with the engaging part.

14. The method of operating the robot system of claim 13, comprising the steps of:
operating the finger members so that the pair of claw members are located between the pair of finger members; and
then operating the finger members so that the pair of finger members approach each other to bring each of the pair of finger members closer to the corresponding claw member.

15. The method of operating the robot system of claim 13, wherein the control device operates the finger members so that the pair of finger members are located between the pair of claw members, and then operates the finger members so that the pair of finger members separate from each other to bring each of the pair of finger members closer to the corresponding claw member.
